(19) Europäisches Patentamt
European Patent Office
Office européen des brevets

(11) **EP 4 588 988 A1**

(12) **EUROPÄISCHE PATENTANMELDUNG**

(43) Veröffentlichungstag:
**23.07.2025 Patentblatt 2025/30**

(21) Anmeldenummer: **24152271.3**

(22) Anmeldetag: **16.01.2024**

(51) Internationale Patentklassifikation (IPC):
**C09J 9/02** (2006.01)    **C09J 11/06** (2006.01)
**C09J 7/35** (2018.01)

(52) Gemeinsame Patentklassifikation (CPC):
**C09J 7/35; C09J 9/02; C09J 11/06;** C08K 3/24;
C08K 3/28; C08K 3/38; C08K 5/098; C08K 5/31;
C08K 5/3442; C08K 5/3445; C08K 5/42; C08K 5/43;
C08K 5/47; C08K 5/50; C08K 2201/001;    (Forts.)

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **TESA SE
22848 Norderstedt (DE)**

(72) Erfinder:
• **SCHUH, Christian
Norderstedt (DE)**

• **WANG, Shuang
Norderstedt (DE)**
• **KEITE-TELGENBÜSCHER, Klaus
Norderstedt (DE)**
• **DOCKWEILER, Dennis
Norderstedt (DE)**
• **SCHAFA, Tahmina
Norderstedt (DE)**

(74) Vertreter: **tesa SE
Hugo-Kirchberg-Straße 1
22848 Norderstedt (DE)**

(54) **REAKTIVES KLEBEBAND, REAKTIVES KLEBEBAND-SYSTEM, VERKLEBTER VERBUND UND VERFAHREN ZUM ELEKTRISCHEN LÖSEN DES VERKLEBTEN VERBUNDES**

(57)    Die Erfindung betrifft ein reaktives Klebeband, ein reaktives Klebeband-System, einen verklebten Verbund, ein Verfahren zum elektrischen Lösen des verklebten Verbundes und die Verwendung des Klebebands oder Klebeband-Systems zur Verklebung von Bauteilen in elektronischen, optischen oder feinmechanischen Geräten, Automobilen, medizinischen Geräten und zahnmedizinischen Geräten.

Das reaktive Klebeband umfasst wenigstens eine reaktiv aushärtbare Klebemasseschicht D enthaltend eine Basismasse, wobei die Basismasse
a) ein oder mehrere Polymere, und
b) ein oder mehrere radikalisch polymerisierbare Monomere und/oder Oligomere, und
c) wenigstens einen Initiator und/oder
d) wenigstens einen Redox-Katalysator,
enthält, und wobei die reaktiv aushärtbare Klebemasseschicht D zusätzlich
e) wenigstens ein Elektrolyt enthält.

**Fig. 1**

EP 4 588 988 A1

**(Forts. nächste Seite)**

(52) Gemeinsame Patentklassifikation (CPC): (Forts.)
C09J 2203/326; C09J 2301/208; C09J 2301/314;
C09J 2301/408; C09J 2301/416; C09J 2301/502

## Beschreibung

Die Erfindung betrifft ein reaktives Klebeband, ein reaktives Klebeband-System, einen verklebten Verbund, ein Verfahren zum elektrischen Lösen des verklebten Verbundes und die Verwendung des Klebebands oder Klebeband-Systems zur Verklebung von Bauteilen in elektronischen Geräten, Automobilen, medizinischen Geräten und zahnmedizinischen Geräten.

Reaktive, insbesondere raumtemperaturhärtende, zum Beispiel auf der Polymerisation von Acrylatmonomeren basierende Haftklebebänder, werden seit einigen Jahren entwickelt und haben einen hohen Reifegrad erreicht. Ein wesentliches Problem ist dabei immer noch die Lagerstabilität der nicht ausgehärteten Klebebänder. Dabei soll die Lagerung ebenfalls bei Raumtemperatur erfolgen.

Reaktiv aushärtbare Klebemassen und daraus hergestellte Klebebänder werden in einer Reihe von Schriften des Standes der Technik beschrieben. Hierbei wird eine reaktive Komponente - insbesondere auf Basis von Acrylmonomeren- in einen Polymer-Matrixfilm eingebracht, und zwar in Gegenwart von Substanzen, die nach Aktivierung die reaktive Aushärtung der Klebemasse bewirken, die aber im Lagerungszustand, also ohne Aktivierung, noch keine Reaktion auslösen. Die Reaktion - etwa eine Polymerisation beziehungsweise Härtung - der reaktiven Komponente kann durch äußere Einflüsse starten - wie etwa durch Wärme, Feuchtigkeit, Plasma, Strahlung und so weiter - oder etwa beispielswiese dadurch, dass zwei Schichten der vorgenannten Art, von denen einer einen Initiator und der andere einen Aktivator erhalten, miteinander in direkten Kontakt gebracht werden und der Initiator durch den Aktivator erst aktiviert wird. So erhält man ein Zwei-Komponenten-Klebesystem in Filmform.

Derartige Zweikomponentenklebesysteme auf Basis von Acrylmonomeren in Form haftklebriger Filme (Klebebändern) werden beispielsweise in WO 2014202402 A1, WO 2015062809 A1, WO 2018104053 A1 beschrieben.

Einkomponentige Klebstofffilme auf Basis von Acrylmonomeren gehören ebenfalls zum allgemein bekannten Stand der Technik. Diese werden üblicherweise mit Licht, insbesondere UV-Licht oder blauem Licht gehärtet.

Die DE 10 2021 125429 A1 offenbart beispielsweise einen Klebstofffilm der bzw. ein Haftklebeband das mindestens ein reaktives Acrylatmonomer, einen Initiator, einen Photoredox-Katalysator, (d) ein Polymer aus N-Vinylverbindungen und ein filmbildendes Polymer umfasst.

Neuerdings besteht ein erhöhtes Interesse an "Debonding-on-Demand"-Funktionalitäten, welche aufgrund von Umweltgesetzen bzw. des Bewusstseins der Endkunden für Nachhaltigkeit und einem steigenden Kostendruck bei der Herstellung zustande kommen. Die Anwendungsszenarien für Debonding-Prozesse werden in Nacharbeiten, Reparieren, Recycling und Verarbeitungshilfen klassifiziert.

Die Debonding-Technologien zielen darauf, ein kohäsives Spalten der Klebstoffschicht oder ein adhäsives Ablösen der Klebstoffschicht vom Substrat zu erzielen. Während ersteres eine Reinigung des Substrats vor einer Wiederverklebung erfordert, kommt letzteres ohne eine solche aus.

Adhäsiv lösende Technologien, die die geforderte hohe und dauerhaft zuverlässige Verklebungsfestigkeit garantieren, sind jedoch in der Regel schwieriger zu verwirklichen oder dauern in der Anwendung sehr lange, wie z.B. das Ablösen mittels eines unterwandernden Lösemittels.

So sind derzeit insbesondere in der Nacharbeit oder Reparatur von elektronischen Geräten, wie z.B. Smartphones und Tablet-Computern, vorwiegend kohäsiv spaltende Klebverbindungen im Einsatz, vielfach ausgeführt als Haftklebebänder, die über eine Temperaturerhöhung so weit in ihrer Kohäsion gemindert werden, dass eine manuelle, kohäsive Trennung der Verklebung erfolgen kann. Umfangreiche Nacharbeiten zur Vorbereitung der mit Klebstoffresten verunreinigten Substratoberfläche für eine Wiederverklebung sind die Folge.

Neben wärmevermittelten Trennverfahren werden elektrische Trennverfahren diskutiert. So offenbart beispielsweise die EP 3031875 B1 die Herabsetzung der Klebkraft einer Acrylat-Klebemasse durch das Anlegen einer Spannung.

Die EP 3199344 B1 und die DE 102005050632 A1 offenbart das elektrische Wiederablösen von als Schmelzklebstoffen aufgetragenen Massen.

Die EP 4067401 A1 offenbart ein flüssiges 2-Komponenten-Klebstoffsystem, welches nach erfolgter Verklebung elektrochemisch wieder abgelöst werden kann.

Die EP4050040A1 offenbart flüssige 1-Komponenten-Klebstoffe, die elektrochemisch wieder abgelöst werden können, indem für 30 Minuten eine Spannung angelegt wird.

Die US 2007269659 A1 offenbart einen 2-Komponenten-Klebstoff, der durch in Kontaktbringen der beiden Komponenten aushärtet, und die anschließende Verringerung der Zugfestigkeit des verklebten Verbundes durch das Anlegen einer Spannung von 50 V.

Klebeverbindungen, die durch reaktiv aushärtbare Klebebänder hergestellt sind, weisen in der Regel jedoch sehr hohe Verklebungsfestigkeiten auf.

Diese Klebebandlösungen sind daher nicht oder nicht ohne Beschädigung der damit verklebten Substrate und unter sehr hohem Kraftaufwand wieder ablösbar. Das Wiederablösen wird insbesondere dadurch erschwert, dass bei Raumtemperatur reaktiv aushärtbare Klebebänder gerade bei empfindlichen, insbesondere temperaturempfindlichen, Substraten verwendet werden.

Der vorliegenden Erfindung liegt daher die Aufgabe zugrunde, ein reaktives Klebeband, umfassend wenigstens eine reaktiv aushärtbare Klebemasseschicht D, bereitzustellen, wobei sich das Klebeband mit geringem Kraftaufwand von wenigstens einem Substrat wieder ablösen lassen soll. Dabei soll das Substrat nicht oder nicht signifikant beschädigt werden. Dies soll insbesondere auch bei temperaturempfindlichen Substraten möglich sein. Gleichzeitig soll die Verklebungsfestigkeit des Klebebandes an die zu verklebenden Substrate vor dem Lösen nicht negativ beeinträchtigt sein. Ferner soll das reaktive Klebeband eine gute Lagerungsstabilität aufweisen. Dies gilt nicht nur für das Klebeband in Form eines Bandes auf Rolle. Stattdessen sollen auch kleinere Stanzlinge oder längliche Stanzlinge, die eine hohe Oberfläche aufweisen, eine gute Lagerungsstabilität aufweisen.

Die Aufgabe wird erfindungsgemäß durch das reaktive Klebeband gemäß Anspruch 1 gelöst.

Die Ausdrücke "reaktiv aushärtbares Klebeband" und "reaktives Klebeband" werden im Rahmen der vorliegenden Erfindung synonym verwendet. Dies gilt analog für eine Klebemasse und eine Klebemasseschicht.

Das erfindungsgemäße reaktive Klebeband umfasst wenigstens eine reaktiv aushärtbare Klebemasseschicht D enthaltend eine Basismasse, wobei die Basismasse

a) ein oder mehrere Polymere, und

b) ein oder mehrere radikalisch polymerisierbare Monomere und/oder Oligomere, und

c) wenigstens einen Initiator und/oder

d) wenigstens einen Redox-Katalysator,
enthält, und wobei die reaktiv aushärtbare Klebemasseschicht D zusätzlich

e) wenigstens ein Elektrolyt enthält.

Mittels des enthaltenen Elektrolyten ist die Klebemasseschicht D durch Anlegen einer Spannung elektrisch ablösbar.

Überraschenderweise hat sich herausgestellt, dass sich das erfindungsgemäße reaktive Klebeband nach erfolgter Aushärtung und Verklebung an Substrate ohne großen Kraftaufwand von den verklebten Substraten elektrisch durch Anlegen einer Spannung auf einfache und schnelle Weise wieder ablösen lässt, und gleichzeitig die hohe Verklebungsfestigkeit des Klebebandes an die zu verklebenden Substrate vor dem Lösen nicht negativ beeinträchtigt ist.

Klebebänder und Verfahren zum elektrischen Wiederablösen bzw. zur elektrischen Reduzierung der Klebkraft sind im Stand der Technik prinzipiell bekannt. So offenbart wie oben ausgeführt die EP 3031875 B1 ein solches elektrisches Verfahren. Die elektrisch ablösbare Klebemasse ist dabei eine solche auf Acrylat-Basis.

Auch Schmelzklebstoffe und flüssige 1- und 2-Komponenten Systeme können elektrisch ablösbar ausgerüstet sein, wie oben beschrieben.

Es war vorliegend allerdings nicht abzusehen, dass sich auch ein filmförmig vorliegendes reaktives Klebeband, bei dem die Verklebungsfestigkeiten an verschiedene Substrate im Vergleich zu nicht reaktiven Haftklebebändern vergleichsweise hoch sind, nach dem Verkleben elektrisch ablösen lässt, und zwar ohne, dass die Verklebungsfestigkeit des Klebebandes an die zu verklebenden Substrate vor dem Lösen negativ beeinträchtigt ist. Gleichzeitig ist das Lösen sauber und einfach.

Dabei war insbesondere nicht abzusehen, dass eine im Klebefilm bzw. Klebeband vergleichsweise rigide Matrix elektrisch ablösbar ausgestaltet werden kann und der Elektrolyt hierbei mit der die Reste der Reaktivchemie enthaltenden Matrix überhaupt kompatibel ist und ferner noch schnell genug durch diese Matrix migrieren kann, ohne die Verklebungsfestigkeit negativ zu beeinträchtigen.

Ferner hat sich überraschenderweise herausgestellt, dass auch kleinere Stanzlinge und Stanzteile mit länglichen, feinen Strukturen (Stegbreiten kleiner als 1 cm) und damit vergleichsweise hoher Oberfläche bei geringer Klebefläche mit ausreichender Lagerungsstabilität und weiterhin hohen Klebkräften und/oder Verklebungsfestigkeiten vor dem Wiederablösen erhalten werden können.

Die erfindungsgemäßen Klebebänder eignen sich insbesondere für miniaturisierte Anwendungen, wie sie beispielsweise in der Elektronikindustrie gefordert sind. Hier kommt es immer mehr darauf an, die Verbindungen zwischen den Bauteilen sehr präzise und platzsparend zu realisieren.

Das erfindungsgemäße reaktive Klebeband ist bevorzugt ein doppelseitiges Klebeband. Der Einfachheit halber wird das erfindungsgemäße Klebeband im Rahmen der vorliegenden Erfindung auch in den doppelseitigen Ausführungsformen als "Klebeband" bezeichnet.

Die vorliegende Erfindung betrifft ein Klebeband, welches in beliebigen Konfektionsformen vorliegen kann, wobei Klebebandrollen bevorzugt sind. Das Klebeband, insbesondere in Bahnform, kann entweder in Form einer Rolle, also in Form einer archimedischen Spirale auf sich selbst aufgerollt, hergestellt werden oder als Klebestreifen, wie er zum Beispiel in Form von Zuschnitten oder Stanzlingen erhalten wird.

Das erfindungsgemäße Klebeband liegt vor dem Zuschneiden oder Stanzen insbesondere in Bahnform vor. Unter einer Bahn wird ein Objekt verstanden, dessen Länge (Erstreckung in x-Richtung) um ein Vielfaches größer ist als seine Breite (Erstreckung in y-Richtung) und die Breite entlang der gesamten Länge in etwa vorzugsweise genau gleichbleibend ausgebildet ist.

Der allgemeine Ausdruck "Klebeband", synonym auch "Klebestreifen" genannt, umfasst im Sinne dieser Erfindung alle flächigen Gebilde, wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten.

Das Klebeband weist neben der Längsausdehnung (x-Richtung) und Breitenausdehnung (y-Richtung) auch eine senkrecht zu beiden Ausdehnungen verlaufende Dicke (z-Richtung) auf, wobei die Breitenausdehnung und Längsausdehnung um ein Vielfaches größer sind als die Dicke. Die Dicke ist über die gesamte durch Länge und Breite bestimmte Flächenausdehnung der Klebebänder möglichst gleich, vorzugsweise innerhalb von Toleranzen exakt gleich.

Die Ausführungen gelten analog für die Trägerschicht(en), die als Bestandteil des Klebebandes gemäß einiger bevorzugter Ausführungsformen eine Schicht in x- und y-Richtung ausbildet bzw. ausbilden.

Es versteht sich, dass die einzelnen Schichten entlang der z-Richtung aufeinander angeordnet sind.

Sämtliche Ausführungen der Beschreibung gelten für das erfindungsgemäße reaktive Klebeband, das erfindungsgemäße reaktive Klebeband-System, das erfindungsgemäße Verfahren zur Herstellung des Klebebandes, das erfindungsgemäße Verfahren zur Herstellung des Klebeband-Systems, den erfindungsgemäßen verklebten Verbund, das erfindungsgemäße Verfahren zum Herstellen des verklebten Verbundes sowie das Verfahren zum elektrischen Lösen des Verbundes und die Verwendung des erfindungsgemäßen Klebebandes oder Klebeband-Systems.

Von der Erfindung sind zudem sämtliche Merkmale, die Gegenstände von jeglichen abhängigen Patentansprüchen sind, umfasst. Ferner sind von der Erfindung Kombinationen einzelner Merkmale miteinander und hierbei auch unterschiedlicher Bevorzugungsstufen umfasst. Somit ist von der Erfindung beispielsweise die Kombination eines ersten als "bevorzugt" gekennzeichneten Merkmals mit einem zweiten als "besonders bevorzugt" gekennzeichneten Merkmals umfasst. Hierbei sind auch im Rahmen von "Ausführungsformen" bezeichnete Gegenstände ebenfalls unterschiedlicher Bevorzugungsstufen mit umfasst.

Im Folgenden wird die Klebemasse der reaktiv aushärtbaren Klebemasseschicht D näher ausgeführt.

Die Klebemasseschicht D enthält wenigstens ein Elektrolyt.

Unter einem "Elektrolyt" wird vorliegend eine chemische Verbindung verstanden, "die im festen, flüssigen oder gelösten Zustand in Ionen dissoziiert ist und die sich unter dem Einfluss eines elektrischen Feldes gerichtet bewegt", wie unter dem Wikipedia-Eintrag "Elektrolyt" vom 04.01.2023 aufgeführt.

Bevorzugt ist der Elektrolyt der Klebemasseschicht D ausgewählt aus der Gruppe bestehend aus ionischen Flüssigkeiten und Metallsalzen, wobei ionische Flüssigkeiten besonders bevorzugt sind.

Insbesondere durch eine oder mehrere ionische Flüssigkeiten als Elektrolyt lässt sich das Klebeband auf einfache Weise wieder ablösen, ohne dass die Klebeigenschaften des Klebebandes negativ beeinträchtigt sind. Ionische Flüssigkeiten haben dabei den Vorteil, dass sie sich gut und homogen in der Polymermatrix von Klebemassen verteilen lassen und das Wiederablösen schneller funktioniert als mit anderen Elektrolyten.

Ferner sind die Bestandteile von ionischen Flüssigkeiten, insbesondere bei Raumtemperatur, nicht flüchtig. Ionische Flüssigkeiten sind zudem vergleichsweise hitzestabil und nicht brennbar sowie chemisch vergleichsweise stabil.

Ionische Flüssigkeiten sind im Rahmen der vorliegenden Erfindung Salze, die bei Raumtemperatur, also 23 °C, flüssig sind. Ionische Flüssigkeiten enthalten dementsprechend Anionen und Kationen.

Ionische Flüssigkeiten sind daher als Elektrolyt im Rahmen des erfindungsgemäßen Trennverfahrens bzw. Verfahrens zum elektrischen Lösen besonders gut geeignet.

Wenn eine Spannung angelegt wird, wandern die Anionen zur anodischen Seite und die Kationen zur kathodischen Seite. Ohne sich hierauf einschränken zu wollen, kann mechanistisch davon ausgegangen werden, dass es hierdurch zu einer Absenkung der Klebkraft bzw. Verklebungsfestigkeit der die ionische Flüssigkeit enthaltenden Klebemasseschicht an wenigstens ein Substrat kommt, wodurch eine adhäsive Spaltung zwischen der Klebemasse und dem wenigstens einen Substrat erzielt wird.

Im Rahmen der vorliegenden Erfindung sind prinzipiell alle ionischen Flüssigkeiten geeignet.

Die im Rahmen der vorliegenden Erfindung verwendeten ionischen Flüssigkeiten enthalten wenigstens ein Anion und wenigstens ein Kation. Hierbei ist es auch denkbar, dass die ionische Flüssigkeit zwei oder mehr Typen an Anionen und/oder zwei oder mehr Typen an Kationen umfasst. Ferner ist es denkbar, dass der Klebemasseschicht D zwei oder mehrere verschiedene ionische Flüssigkeiten zugegeben werden bzw. die Klebemasseschicht D dann zwei oder mehrere verschiedene ionische Flüssigkeiten enthält.

Bevorzugt ist das Anion der ionischen Flüssigkeit ausgewählt aus der Gruppe bestehend aus $Br^-$, $AlCl_4^-$, $Al_2Cl_7^-$, $NO_3^-$, $BF_4^-$, $PF_6^-$, $CH_3COO^-$, $CF_3COO^-$, $CF_3CO_3^-$, $CF_3SO_3^-$, $(CF_3SO_2)_2N^-$, $(CF_3SO_2)_3C^-$, $AsF_6^-$, $SbF_6^-$, $CF_3(CF_2)_3SO_3^-$, $(CF_3CF_2SO_2)_2N^-$, $CF_3CF_2CF_2COO^-$, $(FSO_2)_2N^-$, $N(CN)_2^-$, Benzoat, Octanoat, 2-Hydroxypropan-1,2,3-tricarboxylat, Methyl-Phosphonat, Ethylsulfat.

Hiermit wird überraschenderweise in reaktiv aushärtbaren Klebemassen eine extrem hohe Reduzierung der Verklebungsfestigkeit durch Anlegen einer Spannung und damit eine besonders gute elektrische Ablösbarkeit des erfindungsgemäßen Klebebandes erzielt. Insbesondere gelingt das (Wieder-)Ablösen mit diesem Anion besonders schnell und es verbleiben keine Rückstände.

Wiederum bevorzugt ist das Anion der ionischen Flüssigkeit ausgewählt aus der Gruppe bestehend aus Br-, $AlCl_4^-$, $Al_2Cl_7^-$, $NO_3^-$, $BF_4^-$, $PF_6^-$, $CH_3COO^-$, $CF_3COO^-$, $CF_3CO_3^-$, $CF_3SO_3^-$, $(CF_3SO_2)_2N^-$, $(CF_3SO_2)_3C^-$, $AsF_6^-$, $SbF_6^-$, $CF_3(CF_2)_3SO_3^-$ $(CF_3CF_2SO_2)_2N^-$, $CF_3CF_2CF_2COO^-$, $(FSO_2)_2N^-$, $N(CN)_2^-$.

Besonders bevorzugt ist das Anion ausgewählt aus der Gruppe bestehend aus $(CF_3SO_2)_2N^-$, $(FSO_2)_2N^-$, $PF_6^-$ und $N(CN)_2^-$.

Diese Anionen sind besonders gut geeignet, da hiermit die beste elektrische Ablösbarkeit erzielt wird. Insbesondere gelingt das (Wieder-)Ablösen mit diesen Anionen besonders schnell und es verbleiben keine Rückstände.

Ganz besonders bevorzugt sind $(FSO_2)_2N^-$, $PF_6^-$ und $N(CN)_2^-$, wiederum bevorzugt ist $(FSO_2)_2N^-$.

Bevorzugt ist das Kation der ionischen Flüssigkeit ausgewählt aus der Gruppe bestehend aus Kationen auf Imidazolium-Basis, Kationen auf Pyridinium-Basis, Kationen auf Pyrrolidin-Basis und Kationen auf Ammonium-Basis, Kationen auf Phosphonium-Basis, Kationen auf Oxazolium-Basis, Kationen auf Guadinium-Basis und Kationen auf Thiazolium-Basis.

Besonders bevorzugt ist das Kation der ionischen Flüssigkeit ausgewählt aus der Gruppe bestehend aus Kationen auf Imidazolium-Basis, Kationen auf Pyridinium-Basis und Kationen auf Ammonium-Basis, wobei Kationen auf Imidazolium-Basis und Kationen auf Pyridinium-Basis wiederum bevorzugt sind.

Hiermit wird überraschenderweise in reaktiv aushärtbaren Klebemassen eine extrem hohe Reduzierung der Verklebungsfestigkeit durch Anlegen einer Spannung und damit eine besonders gute elektrische Ablösbarkeit des erfindungsgemäßen Klebebandes erzielt. Insbesondere gelingt das (Wieder-)Ablösen mit diesem Anion besonders schnell und es verbleiben keine Rückstände.

Wiederum ganz besonders bevorzugt sind Kationen auf Imidazolium-Basis.

Diese Kationen sind besonders gut geeignet, da hiermit die beste elektrische Ablösbarkeit erzielt wird. Insbesondere gelingt das (Wieder-)Ablösen mit diesen Kationen besonders schnell und es verbleiben keine Rückstände.

Ganz besonders bevorzugt ist das Kation ausgewählt aus der Gruppe bestehend aus 1-Ethyl-3-methylimidazolium und 1-Butyl-3-methylimidazolium. Wiederum bevorzugt ist das Kation 1-Butyl-3-methylimidazolium.

Hiermit wird überraschenderweise in reaktiv aushärtbaren Klebemassen eine extrem hohe Reduzierung der Verklebungsfestigkeit durch Anlegen einer Spannung und damit eine besonders gute elektrische Ablösbarkeit des erfindungsgemäßen Klebebandes erzielt. Insbesondere gelingt das (Wieder-)Ablösen mit diesem Anion besonders schnell und es verbleiben keine Rückstände.

Bevorzugt ist der Elektrolyt der Klebemasseschicht D ausgewählt aus der Gruppe bestehend aus den ionischen Flüssigkeiten 1-Butyl-3-methylimidazolium-bis(trifluormethylsulfonyl)imid (BMIM-TFSI), 1-Butyl-3-methylimidazolium-bis(fluorsulfonyl)imid (BMIM-FSI), 1-Ethyl-3-methylimidazolium-bis(trifluormethylsulfonyl)imid (EMIM-TFSI), 1-Ethyl-3-methylimidazolium-bis(fluorsulfonyl)imid (EMIM-FSI), 1-Ethyl-3-methylimidazolium-dicyanamid, 1-Butyl-3-methylimidazoliumhexafluorophosphat, 1-Hexyl-3-methylimidazoliumhexafluorophosphat, 1-Methyl-3-octylimidazoliumhexafluorophosphat,1-Butylpyridinium hexafluorophosphat, 1-Butyl-3-methylpyridiniumhexafluorophosphat, 1-Butyl-4-methylpyridinium-hexafluorophosphahat, 1-Ethyl-3-methylimidazoliumhexafluorophosphat, 1-Ethyl-2,3-dimethylimidazoliumhexafluorophosphat, 1-Butyl-2,3-dimethylimidazolium-hexafluorophosphat, 1-Methyl-3-propylimidazoliumhexafluorophosphat, 1-Methyl-3-pentylimidazoliumhexafluorophosphat, 1-Heptyl-3-methylimidazolium-hexafluorophosphat, 1-Dodecyl-3-methylimidazoliumhexafluorophosphat, 1-Methyl-3-tetradecylimidazoliumhexafluorophosphat, 1-Methyl-3-nonylimidazolium-hexafluorophosphat, 1-Hexadecyl-3-methylimidazoliumhexafluorophosphat, 1-Decyl-3-methylimidazoliumhexafluorophosphat, 1-Methyl-3-octadecylimidazolium-hexafluorophosphat, 1-Benzyl-3-methylimidazoliumhexafluorophosphat, 1,3-Diethylimidazoliumhexafluorophosphat, 1-Ethyl-3-propylimidazoliumhexafluorophosphat, 1-Butyl-3-ethylimidazoliumhexafluorophosphat, 1-Butyl-1-methylpiperidinium-hexafluorophosphat, 1-Methyl-1-propylpiperidiniumhexafluorophosphat, 1-Ethylpyridiniumhexafluorophosphat, 1-Butyl-3-methylpyridiniumhexafluorophosphat, 1-Propylpyridiniumhexafluorophosphat, 1-Butyl-4-methylpyridiniumhexafluorophosphat, 1-Butylpyridinium hexafluorophosphat, 1 -Hexylpyridiniumhexafluorophosphat, 1-Butyl-2-methylpyridiniumhexafluorophosphat, 1-Ethyl-1-methylpyrrolidinium-hexafluorophosphat, 1-Methyl-1-propylpyrrolidiniumhexafluorophosphat, Trihexyltetradecylphosphoniumhexafluorophosphat.

Besonders bevorzugt ist der Elektrolyt der Klebemasseschicht D ausgewählt aus der Gruppe bestehend aus den ionischen Flüssigkeiten 1-Butyl-3-methylimidazolium-bis(trifluormethylsulfonyl)imid (BMIM-TFSI), 1-Butyl-3-methylimidazolium- bis(fluorsulfonyl)imid (BMIM-FSI), 1-Ethyl-3-methylimidazolium-bis(trifluormethylsulfonyl)imid (EMIM-TFSI), 1-Ethyl-3-methylimidazolium-bis(fluorsulfonyl)imid (EMIM-FSI) und 1-Ethyl-3-methylimidazolium-dicyanamid.

Bevorzugt ist es, dass die Klebemasseschicht D 0,5 bis 25 Gewichtsteile, besonders bevorzugt 2 bis 22 Gewichtsteile, an Elektrolyten, bevorzugt ionischen Flüssigkeiten, bezogen auf 100 Gew.-% der Basismasse enthält.

Mit einer derartigen bevorzugten bzw. besonders bevorzugten Menge an Elektrolyten, insbesondere ionischen Flüssigkeiten, wird ein vergleichsweise schnelles elektrisches Ablösen ermöglicht, wobei gleichzeitig die Adhäsion der Klebemasseschicht an die benachbarten Schichten, insbesondere wenigstens ein Substrat, vor dem Ablösen nicht negativ beeinträchtigt ist.

Überraschenderweise konnten auch Klebemasseschichten D mit bis zu 22 Gewichtsteilen an ionischen Flüssigkeiten präpariert werden. Diese zeigten im Vergleich zu Klebemasseschichten ohne enthaltene Elektrolyte zum Teil deutlich erhöhte Verklebungsfestigkeiten, die sich nach Anlegen einer geeigneten Spannung leicht lösen ließen.

Gemäß bevorzugter Ausführungsformen der Erfindung enthält die Klebemasseschicht D 5 bis 25 Gewichtsteile, besonders bevorzugt 13 bis 22 Gewichtsteile, an Elektrolyten, bevorzugt ionischen Flüssigkeiten.

Je nachdem wie weich die die ionische Flüssigkeit enthaltene Klebemasseschicht D ist, können entsprechend ausgleichend wirkende Additive, insbesondere rheologie-modifizierende Additive, verwendet werden.

Gemäß weiterer bevorzugter Ausführungsformen der Erfindung enthält die Klebemasseschicht D 0,5 bis 18 Gewichtsteile, besonders bevorzugt 2 bis 12 Gewichtsteile, an Elektrolyten, bevorzugt ionischen Flüssigkeiten.

Die Masse der Klebemasseschicht D ist eine reaktiv aushärtbare Klebemasse.

Unter einer "reaktiv aushärtbaren Klebemasse" ist im Rahmen der vorliegenden Erfindung eine Klebemasse zu verstehen, die durch chemische Reaktion wenigstens eines enthaltenen entsprechend reaktiven Bestandteils aushärtet und hierbei die Klebeverbindung erzeugt.

Im Rahmen der vorliegenden Erfindung werden derartige Klebemassen auch als "Reaktivklebemassen" bezeichnet.

Bevorzugt fungieren die erfindungsgemäßen reaktive aushärtbaren Klebebänder bzw. die entsprechenden Reaktivklebemassen nach der Härtung als Strukturklebstoff oder semistrukturelle Klebstoffe. Nach DIN EN 923: 2006-01 sind Strukturklebstoffe Klebstoffe, die Klebverbindungen bilden, die in einem Gefüge für eine vorgegebene längere Zeitspanne eine festgelegte Festigkeit beibehalten können (nach ASTM-Definition: "bonding agents used for transferring required loads between adherends exposed to service environments typical for the structure involved"). Es sind also Klebstoffe für chemisch und physikalisch hoch beanspruchbare Klebungen, die im ausgehärteten Zustand zur Verfestigung der Klebebänder beitragen.

Der Begriff "(semi-)struktureller Klebstoff" oder "(semi-)strukturelle Klebstoffe" umfasst die "semi-strukturellen Klebstoffe" und die "strukturellen Klebstoffe". "Semi-strukturelle Klebstoffe" sind solche gehärteten Klebstoffe, die im Zugschertest eine Zugscherfestigkeit von mindestens 1,0 MPa und bevorzugter mindestens etwa 1,5 MPa (jeweils auf Stahl) aufweisen. Als "strukturelle Klebstoffe" oder "Strukturklebstoffe" werden solche ausgehärteten Klebstoffe bezeichnet, die eine besonders hohe Zugscherfestigkeit aufweisen und die im Zugschertest eine Zugscherfestigkeit von mindestens 5 MPa, bevorzugter von mindestens 7 MPa und besonders bevorzugt von mindestens 10 MPa (jeweils auf Stahl) aufweisen.

Wie eingangs ausgeführt erfolgt die chemische Reaktion nach einer Aktivierung, wie etwa durch Wärme, Feuchtigkeit, Plasma, Strahlung oder durch Inkontaktbringen zweier Klebemasseschichten, die geeignete Reaktanden enthalten.

Bevorzugt sind im Rahmen der vorliegenden Erfindung reaktiv aushärtbare Klebebänder, bei denen die Aushärtung durch Aktivierung mittels Strahlung, insbesondere mittels Lichts einer Wellenlänge im sichtbaren Bereich des elektromagnetischen Spektrums oder mittels UV-Licht, oder durch Aktivierung mittels Inkontaktbringen mit einer weiteren reaktiv aushärtbaren Klebemasseschicht bzw. einem entsprechenden reaktiv aushärtbaren Klebeband erfolgt.

Die Basismasse der reaktiv aushärtbaren Klebemasseschicht D enthält wenigstens

a) ein oder mehrere Polymere, und

b) ein oder mehrere radikalisch polymerisierbare Monomere und/oder Oligomere, und

c) wenigstens einen Initiator und/oder

d) wenigstens einen Redox-Katalysator.

Die Gesamtmasse der Bestandteile der Basismasse ergibt in Summe 100 Gewichtsprozent (Gew.-%), wobei die Elektrolyten e) nicht der Basismasse zugeordnet werden.

Die Mengenangaben der Bestandteile a) bis d) in Gewichtsprozent beziehen sich jeweils auf das Gesamtgewicht der Basismasse.

Ferner wird die Menge an eventuell enthaltenen Additiven, wie unten beschrieben, ebenfalls zu den 100 Gewichtsprozent der Basismasse gezählt.

Insbesondere wird die Basismasse aus sämtlichen Bestandteilen der reaktiv aushärtbaren Klebemasse gebildet, die nicht zu den Elektrolyten e) zählen.

Gegebenenfalls weitere optional vorliegende Bestandteile, wie Lösemittel beziehungsweise Wasser, dienen nur der Herstellung und werden in dieser Betrachtung nicht zum Gesamtgewicht der Bestandteile der Basismasse gezählt. Das gilt auch für Lösemittel, die gegebenenfalls in den kommerziell erhältlichen Rohstoffen bereits enthalten sind.

Die reaktiv aushärtbare Klebemasseschicht D enthält bevorzugt 80 % oder mehr der Basismasse, bezogen auf die Gesamtmasse der reaktiv aushärtbaren Klebemasseschicht D. Gemäß bevorzugter Ausführungsformen der Erfindung besteht die reaktiv aushärtbare Klebemasseschicht D dabei aus Basismasse und e) zugegebenen Elektrolyten.

**a) Polymer**

Es können ein (einziges) Polymer oder mehrere Polymere enthalten sein. Die Beschreibung des "Polymers" also in seiner Bedeutung ebenso wie der Ausdruck "Gesamtmenge" sowohl das Vorliegen eines einzigen Polymers als auch das Vorliegen mehrerer Polymere ein. Die Bezeichnungen "wenigstens ein" bzw. "ein oder mehrere" oder auch "genau ein" beziehen sich hierin in branchenüblicher Weise auf die chemische Natur der entsprechenden Verbindungen und nicht auf deren Stoffmenge.

Die Basismasse umfasst bevorzugt 10 Gew.-% bis 60 Gew.-% mindestens eines Polymers a), bevorzugter umfasst die Basismasse 25 Gew.-% bis 60 Gew.-% und insbesondere bevorzugt 50 Gew.-% bis 70 Gew.-% mindestens eines Polymers a), jeweils bezogen auf die Gesamtmasse der Basismasse.

Die Gewichtsprozentangaben (Gew.-%) beziehen sich auf ein Polymer oder auf die Summe aller Polymere, falls zwei oder mehr Polymere vorliegen.

Gemäß bevorzugter Ausführungsformen der Erfindung ist das oder sind die Polymer(e) ausgewählt aus der Gruppe bestehend aus Ethylen-Vinylacetat-Copolymeren (EVA), Poly(meth)acrylaten, Polyurethanen (PU), Polyvinylacetaten (PVA), Polyvinylacetalen, wie insbesondere Polyvinylbutyral (PVB), Polyestern und Polymeren aus Monomeren umfassend N-Vinylverbindungen.

Besonders bevorzugt ist das oder sind die Polymer(e) ausgewählt aus der Gruppe bestehend aus Ethylen-Vinylacetat-Copolymeren (EVA), Poly(meth)acrylaten, Poly(N-Vinylcaprolactam), Poly(N-Vinylpyrrolidon) und Polyurethanen (PU).

Gemäß besonders bevorzugter Ausführungsformen enthält die Basismasse wenigstens ein Poly(meth)acrylat. Bevorzugt enthält die Basismasse dabei 10 Gew.-% bis 60 Gew.-%, besonders bevorzugt 25 Gew.-% bis 60 Gew.-%, insbesondere bevorzugt 50 Gew.-% bis 60 Gew.-%, an Poly(meth)acrylat.

Unter einem "Poly(meth)acrylat" wird ein Polymer verstanden, welches durch Polymerisation, beispielsweise radikalische Polymerisation, von Acryl- und/oder Methacrylmonomeren sowie gegebenenfalls weiteren, copolymerisierbaren Monomeren erhältlich ist. Insbesondere wird unter einem "Poly(meth)acrylat" ein Polymer verstanden, dessen Monomerbasis zu mindestens 50 Gew.-% aus Acrylsäure, Methacrylsäure, Acrylsäureestern und/oder Methacrylsäureestern besteht, wobei Acrylsäureester und/oder Methacrylsäureester zumindest anteilig, bevorzugt zu mindestens 30 Gew.-%, bezogen auf die gesamte Monomerbasis des betreffenden Polymers, enthalten sind.

Die Basismasse enthält bevorzugt wenigstens ein Poly(meth)acrylat, sie kann also ein oder mehrere Poly(meth)acrylate enthalten. Die Bezeichnungen "wenigstens ein" bzw. "ein oder mehrere" oder auch "genau ein" beziehen sich hierin in branchenüblicher Weise auf die chemische Natur der entsprechenden Verbindungen und nicht auf deren Stoffmenge. Dies gilt ebenso für die Monomerzusammensetzung des Poly(meth)acrylats.

Beispielsweise kann die Monomerzusammensetzung als Monomer ausschließlich n-Butylacrylat umfassen, was bedeuten würde, dass die Monomerzusammensetzung eine Vielzahl von n-Butylacrylat-Molekülen umfasst.

Bei dem oder den Poly(meth)acrylat(en) kann es sich prinzipiell um jegliche Poly(meth)acrylate handeln.

Gemäß bevorzugter Ausführungsformen der Erfindung sind die enthaltenen Poly(meth)acrylate durch Polymerisation einer Monomerzusammensetzung herstellbar, die ein oder mehrere Monomere enthält, die ausgewählt sind aus der Gruppe bestehend aus Ethylacrylat, n-Butylacrylat, iso-Butylacrylat, tert-Butylacrylat, iso-Amylacrylat, n-Hexylacrylat, 2-Heptylacrylat, n-Heptylacrylat, 2-Ethylhexylacrylat, 2-Octylacrylat, n-Octylacrylat, iso-Octylacrylat, n-Nonylacrylat, iso-Nonylacrylat, n-Decylacrylat, iso-Decylacrylat, 2-[[(Butylamino)carbonyl]oxy]ethylacrylat, 2-Cyanoethylacrylat, 2-(2-Ethoxyethoxy)ethylacrylat, 2-Phenoxyethylacrylat, iso-Stearylacrylat, Docosylacrylat, 2-[2-(2-Methoxyethoxy)-ethoxy]ethylacrylat, Isobornylacrylat, Norbornylacrylat, Benzylacrylat, 3,3,5-Trimethylcyclohexylacrylat, Cyclohexylacrylat, 1-Acryloyloxy-3-hydroxyadamantan, 4-[(6-Acryloyloxy)hexyloxy]4'-cyanobiphenyl, N-Succinimidylacrylat, 1-Ethylcyclopentylacrylat, N-tert-Octylacrylamid, N-tert-Butylacrylamid, Dimethylacrylamid, Diethylacrylamid, N-iso-Propylacrylamid, N-Hydroxyethylacrylamid, Acrylamid, 2-Acrylamido-2-methylpropansulfonsäure, N-[3-(Dimethylamino)propyl]acrylamid, Diacetonacrylamid, N-(Butoxymethyl)acrylamid, N-Phenylacrylamid, N-[2-(Dimethylamino)ethyl]acrylamid, N-[2-(Diethylamino)ethyl]acrylamid, Methylmethacrylat, Ethylmethacrylat, Cyclohexylmethacrylat, Benzylmethacrylat, Isobornylmethacrylat, Glycerolformalmethacrylat, 2-Dimethylaminoethylmethacrylat, Phenoxyethylmethacrylat, 9-Anthrylmethylmethacrylat, 2-Ethyl-2-adamantylmethacrylat, 2-(Acetoacetyloxy)ethylmethacrylat, 2-Isopropyl-2-methacryloyloxyadamantan, iso-Propylmethacrylat, iso-Butylmethacrylat, tert-Butylmethacrylat, Furfurylmethacrylat, 2-Methacryloyloxy-2-methyladamantan, 2-Morpholinoethylmethacrylat, Phenylmethacrylat, N-Succinimidylmethacrylat, 2-(tert-Butylamino)ethylmethacrylat, 2-Cyclohexylpropan-2-yl-methacrylat, 1-Adamantylmethacrylat, 1-Methylcyclopentylmethacrylat,

N-tert-Butylmethacrylamid, N-(Methoxymethyl)methacrylamid, N,N-Dimethylmethacrylamid, Methacrylamid, N-Phenylmethacrylamid, N,N-Dimethylmethacrylamid, N-iso-Propylmethacrylamid, N-Vinylformamid, N-Vinylpyrrolidon, N-Vinylcaprolactam, N-Vinylcarbazol, N-Vinylimidazol, Vinylmethyloxazolidinon, N-Vinyl-N-methylacetamid, Hydroxyethylacrylat, Hydroxypropylacrylat, 4-Hydroxybutylacrylat, 2-Hydroxy-3-phenoxypropylacrylate, Hydroxyethylmethacrylat, Hydroxypropylmethacrylat, 4-Hydroxybutylmethacrylat, 2-Hydroxy-3-phenoxypropylmethacrylat, 4-Hydrxyethylacrylamid, Acrylsäure, Methacrylsäure, 2-Acryloyloxyethylsuccinat, Methacryloxyethylsuccinat, Sulfoethylmethacrylat, Methacrylamid, Glycidylacrylat, Glycidylmethacrylat, 3,4-Epoxycyclohexylmethylacrylat, 3,4-Epoxycyclohexylmethylmethacrylat, 4-Hydroxybutylacrylateglycidylether, 4-Hydroxybutylmethacrylateglycidylether, Isocyanatoethylacrylat, Isocyanatoethylmethacrylat, 2-[2-(Methacryloyloxy)ethyloxy]ethylisocyanat, 2-[2-(Acryloyloxy) ethyloxy]ethylisocyanat und $\alpha,\alpha$-Dimethyl-m-Isopropenylbenzylisocyanat.

Gemäß bevorzugter Ausführungsformen sind die enthaltenen Poly(meth)acrylate durch Polymerisation einer Monomerzusammensetzung herstellbar, die als Monomere 2-Phenoxyethylacrylat (PEA) und Methylmethacrylat (MMA) enthält.

Gemäß weiterer besonders bevorzugter Ausführungsformen enthält die Basismasse wenigstens ein Polyurethan. Bevorzugt enthält die Basismasse dabei 10 Gew.-% bis 60 Gew.-%, besonders bevorzugt 25 Gew.-% bis 60 Gew.-%, insbesondere bevorzugt 30 Gew.-% bis 50 Gew.-%, an Polyurethan.

Bevorzugt sind thermoplastische Polyurethane mit einer kristallinen Schmelztemperatur von kleiner als 100 °C und/oder einer Erweichungstemperatur von kleiner als 100 °C. In diesem Zusammenhang steht der Begriff Erweichungstemperatur für die Temperatur, ab der das thermoplastische Granulat mit sich selbst verklebt. Wenn es sich bei dem Polymer um ein semikristallines thermoplastisches Polymer handelt, dann weist es neben seiner Erweichungstemperatur (die mit dem Schmelzen der Kristallite zusammenhängt) sehr bevorzugt eine Glasübergangstemperatur von höchstens 25 °C, bevorzugt höchstens 0 °C, auf.

Gemäß bevorzugter Ausführungsformen wird wenigstens ein thermoplastisches Polyurethan eingesetzt. Kommerziell erhältliche thermoplastisches Polyurethane sind zum Beispiel Desmocoll® 530/1 und Desmocoll® 540/3 sowie Desmomelt® 530 von Covestro AG (Leverkusen, Deutschland) oder IROSTIC® S-6558-06 und IROSTIC® S 8612 von Huntsman (Huntsman Holland B.V., Botlek-Rotterdam, Niederlande) oder alternative Varianten aus diesen Produktlinien. Außerdem gibt es die Produktlinien Elastollan® von BASF (Ludwigshafen, Deutschland) oder Pearlbond von Lubrizol (Lubrizol Advanced Materials Europe BVBA, Brüssel, Belgien).

Vorzugsweise besitzt das thermoplastische Polyurethan eine Erweichungstemperatur von kleiner als 100 °C, insbesondere kleiner als 80 °C. Bevorzugte Beispiele für solche thermoplastische Polyurethane sind Desmomelt® 530 und IROSTIC® S-6558-06. Desmomelt® 530 ist ein hydroxy-terminiertes, weitgehend lineares, thermoplastisches, stark kristallisierendes Polyurethan-Elastomer. IROSTIC® S-6558-06 ist laut Herstellerangabe ein lineares thermoplastisches Polyurethan für lösungsmittelbasierte Klebstoffe. Die Merkmale sind laut Herstellerangabe: sehr geringe Kristallisationsrate, lange offene Zeit, sehr niedrige Aktivierungstemperatur.

Gemäß weiterer besonders bevorzugter Ausführungsformen enthält die Basismasse wenigstens ein Polymer aus Monomeren umfassend N-Vinylverbindungen.

Bevorzugt enthält die Basismasse dabei 5 Gew.-% bis 50 Gew.-%, besonders bevorzugt 5 Gew.-% bis 30 Gew.-%, insbesondere bevorzugt 10 Gew.-% bis 20 Gew.-%, an Polymer aus Monomeren umfassend N-Vinylverbindungen.

Beispiele für solche N-Vinylverbindungen sind N-Vinylacetamid (CAS-Nr. 5202-78-8), N-Vinylcaprolactam (CAS-Nr.: 2235-00-9), N-Vinylpyrrolidon (CAS-Nr.: 88-12-0), N-Vinyl-N-Methylacetamid (CAS-Nr. 3195-78-6), 5-Methyl-3-vinyl-2-oxazolidinone (CAS-Nr. 3395-98-0) oder N-Vinyl Isobutyramid.

Bevorzugt sind N-Vinyl enthaltende Lactame und N-Vinyl enthaltende Oxazolidinone. Vorteilhaft ist es, wenn die N-Vinylverbindungen des Polymers N-Vinylcaprolactam (CAS-Nr.: 2235-00-9), N-Vinylpyrrolidon (CAS-Nr.: 88-12-0) oder 5-Methyl-3-vinyl-2-oxazolidinone (CAS-Nr.: 3395-98-0) sind.

Bevorzugt sind N-Vinylcaprolactam und/oder N-Vinylpyrrolidon, wiederum bevorzugt ist die N-Vinylverbindung des Polymers N-Vinylcaprolactam (NVC).

Gemäß bevorzugter Ausführungsformen der Erfindung ist somit als Polymer wenigstens Poly-N-Vinylcaprolactam in der Basismasse der Klebemasseschicht D enthalten.

Hierdurch wird überraschenderweise die Aushärtung erleichtert.

Gemäß bevorzugter Ausführungsformen der Erfindung ist das Polymer, insbesondere und beispielsweise Poly(meth)acrylat, der Reaktivklebmasse im erfindungsgemäßen reaktiven Klebeband gegenüber dem mindestens einen radikalisch polymerisierbaren Monomer oder Oligomer und dem Initiatorsystem sowie den gegebenenfalls übrigen Stoffen im Wesentlichen inert. Inert bedeutet in diesem Zusammenhang, dass die radikalisch polymerisierbaren Monomere oder Oligomere und das Initiatorsystem und die ggf. übrigen Stoffe vor der Lichthärtung unter geeignet gewählten Bedingungen, insbesondere bei Raumtemperatur (23 °C), im Wesentlichen nicht mit dem Polymer, insbesondere Poly(meth)acrylat, reagieren.

Aus diesem Grund sind in einer bevorzugten Ausführungsform keine Säure, insbesondere keine Acrylsäure oder andere Monomere mit einer oder mehreren Carboxylgruppen, und keine Amine, insbesondere keine tertären Amine, als Comonomer(e) in der Monomerzusammensetzung des Polymers bzw. Poly(meth)acrylats enthalten.

In einer speziellen Ausführungsform ist das Poly(meth)acrylat bzw. die Poly(meth)acrylate zusätzlich auch nach der Aktivierung der Härtungsreaktion inert. Dies bedeutet, dass in der radikalischen Reaktion das Poly(meth)acrylat nicht mit reagiert.

**b) radikalisch polymerisierbare Monomere und/oder Oligomere**

Die Basismasse der Reaktivklebemasse des erfindungsgemäßen reaktiven Klebebandes umfasst mindestens ein radikalisch polymerisierbares Monomer oder Oligomer b).

In Übereinstimmung mit dem fachmännischen Verständnis soll das radikalisch polymerisierbare Monomer oder Oligomer für ein Monomer oder Oligomer stehen, das zu einer Radikalkettenpolymerisation in der Lage ist.

Unter radikalisch polymerisierbaren Oligomeren versteht der Fachmann, insbesondere in Abgrenzung zu Polymeren, insbesondere radikalisch polymerisierbare Verbindungen mit einem Gewichtsmittel der Molekulargewichtsverteilung $M_W$ von weniger als 35000 g/mol, insbesondere weniger als 15000 g/mol, insbesondere weniger als 10000 g/mol, und dabei im Rahmen der vorliegenden Erfindung insbesondere acrylierte bzw. methacrylierte Ether-Oligomere, Butadien-Oligomere, Ester-Oligomere, Carbonat-Oligomere, Silikon-Oligomere, Epoxidverbindungen mit einem Gewichtsmittel der Molekulargewichtsverteilung $M_W$ von weniger als 35000 g/mol, insbesondere weniger als 15000 g/mol, insbesondere weniger als 10000 g/mol. Dies sind unter anderem Epoxy-(Meth)acrylate, aliphatische, aromatische und Silikon-Urethan-(Meth)acrylate, aliphatische und aromatische Polyester-(Meth)acrylate, Polybutadien-(Meth)acrylate, dendritische (Meth)acrylate, Polyether-(Meth)acrylate und Polycarbonat-(Meth)acrylate erhältlich zum Beispiel von Miwon und Bomar, wie beispielsweise MIRAMER SC2565 mit einem Mw von 5200 g/mol von der Firma Miwon, oder Oligomere auf Basis von aliphatischen Polyurethanen insbesondere auf Basis von Polyester-Polyurethanen, wie beispielsweise die unter den Handelsnamen EBECRYL® 8402, EBECRYL® 4858 oder EBECRYL® 8809 erhältlichen aliphatischen Urethandiacrylate, oder acrylierte Oligoester zum Beispiel auf Basis von Caprolactonen, wie das kommerziell erhältliche Hydroxyethylcaprolactonacrylat (HECLA; CAS-Nr.: 110489-05-9). Bevorzugt ist die Funktionalität der polymerisierbaren Oligomere, d.h. die Anzahl an radikalisch polymerisierbaren Gruppen pro Molekül 1 bis 20, meist 2 bis 15, hauptsächlich 2 bis 6. Die dynamische Viskosität, bestimmt nach DIN 53019-1 aus 2008, bei 25°C ist bevorzugt größer als 1 Pas, besonders bevorzugt jedoch deutlich über 10 Pas. Insbesondere zur Herstellung von guten Haftklebmassen, mit ausreichender Kohäsion eignen sich Oligomere als Bestandteil der Klebmasse mit dynamischen Viskositäten bei 25°C von größer 20 Pas, bevorzugt größer 30 Pas. Im Rahmen der vorliegenden Erfindung wird die dynamische Viskosität dabei gemäß der DIN 53019-1 aus 2008; bei 25 °C, mit einer Schergeschwindigkeit von 1 s$^{-1}$ bestimmt.

Gemäß bevorzugter Ausführungsformen ist das erfindungsgemäße reaktive Klebeband dadurch gekennzeichnet, dass das mindestens eine radikalisch polymerisierbare Monomer oder Oligomer einen Siedepunkt bei 1 mbar von mindestens 30 °C, bevorzugt mindestes 60 °C, und besonders bevorzugt von mindestens 80 °C aufweist, oder bei 23 °C als Feststoff vorliegt. In diesem Zusammenhang sind radikalisch polymerisierbare Oligomere besonders bevorzugt.

Daher ist in einer bevorzugten Ausführungsform das erfindungsgemäße reaktive Klebeband dadurch gekennzeichnet, dass die Basismasse der Klebemasseschicht D ein radikalisch polymerisierbares Oligomer umfasst.

Ein geeignetes radikalisch polymerisierbares Monomer ist ausgewählt aus der Gruppe bestehend aus Acrylsäureestern (wie z.B. 2-Hydroxy-3-phenoxypropylacrylat), Methacrylsäureestern, Vinylverbindungen und Verbindungen mit Kohlenstoff-KohlenstoffDoppelbindungen, sowie vernetzenden radikalisch polymerisierbaren Monomeren wie Diacrylaten, Dimethacrylaten, Triacrylaten, Trimethacrylaten und höher funktionellen Acrylaten bzw. höher funktionellen Methacrylaten.

Geeignete radikalisch polymerisierbare Oligomere sind insbesondere oligomere Stoffe mit Acrylat- oder Methacrylatfunktion oder Vinylfunktion, wobei die Funktionalisierung einfach oder mehrfach sein kann.

Insbesondere und bevorzugt sind (meth-)acrylat-haltige Oligomere auf Basis von aliphatischen Polyurethanen insbesondere auf Basis von Polyester-Polyurethanen, wie beispielsweise das unter dem Handelsnamen EBECRYL® 8402 erhältliche aliphatische Urethandiacrylat, oder acrylierte Oligoester zum Beispiel auf Basis von Caprolactonen, wie das kommerziell erhältliche Hydroxyethylcaprolactonacrylat (HECLA; CAS-Nr.: 110489-05-9).

Bevorzugte Monomere im Hinblick auf eine hohe Verklebungsfestigkeit sind Acrylsäureester und/oder Methacrylsäureester, in denen der Alkohol-Teil des Esters funktionelle Gruppen enthält. Bevorzugt sind als funktionelle Gruppen aromatische Gruppen, Urethangruppen, Harnstoffgruppen, Sauerstoff- oder Stickstoff-Heterocyclen, Ethergruppen, Estergruppen oder Hydroxy-Gruppen.

Beispiele für bevorzugte Monomere sind 2-Methacryloxyethylphenylurethan (MAPU; CAS-Nr.: 51727-47-0), 2-Phenoxyethylacrylat (CAS-Nr.: 48145-04-6), 2-Phenoxyethylmethacrylat (CAS-Nr.: 10595-06-9), 2-Hydroxy-3-phenoxy-propylacrylat (CAS Nr.: 16969-10-1), 2-Hydroxy-3-phenoxy-propylmethacrylat (CAS-Nr.: 16926-87-7), 2-[2-(Methacryloyloxy)ethoxycarbonyl]benzoesäure (CAS-Nr.: 27697-00-3), 2-Tert-butyl-6-[(3-tert-butyl-2-hydroxy-5-methylphenyl)methyl]-4-methylphenylprop-2-enoat (CAS-Nr.: 61167-58-6), (5-Ethyl-1,3-dioxan-5-yl)methylacrylat (CAS-Nr.

66492-51-1), (2-Oxo-1,3-dioxolan-4-yl)methylmethacrylat (CAS-Nr.: 13818-44-5), Di(ethylenglycol)-2-ethylhexyletheracrylat (CAS-Nr.: 117646-83-0), (2,2-Dimethyl-1,3-dioxolan-4-yl)methylprop-2-enoat (CAS-Nr.: 13188-82-4), Bernsteinsäure-mono-[2-(acryloyloxy)-ethylester] (CAS-Nr.: 50940-49-3), Bernsteinsäure-mono-[2-(methacryloyloxy)ethylester] (CAS-Nr.: 20882-04-6), (2,2-Pentamethylene-1,3-oxazolidyl-3)ethylmethacrylat (CAS-Nr.: 4203-89-8, 2-Hydroxy-3-(prop-2-enoyloxy)propyl-2-methyl-2-propylhexanoat (CAS-Nr.: 444649-70-1), 2-[[(Butylamino)carbonyl]oxy]ethylacrylat (CAS-Nr.: 63225-53-6), Stearylacrylat (CAS-Nr.: 4813-57-4), Stearylmethacrylat (CAS-Nr.: 32360-05-7), sowie die vernetzenden Monomere Diurethandimethacrylat (Isomerenmischung) (CAS-Nr.: 72869-86-4), Bisphenol A-glycerolatdimethacrylat (BIS-GMA, CAS-Nr.: 1565-94-2), Bisphenol A-dimethacrylat (BIS-DMA, CAS-Nr.: 3253-39-2), Ethylenglykol-diacrylat (CAS-Nr.: 2274-11-5), Ethylenglykoldimethacrylat (CAS-Nr.: 97-90-5), Trimethyloylpropanpropoxylattriacrylat (CAS-Nr.: 53879-54-2), Trimethyloylpropan-triacrylat (CAS-Nr.: 15625- 89-5) und/oder Di(trimethylolpropan) tetraacrylat (CAS-Nr.: 94108-97-1).

Besonders bevorzugt sind 2-Hydroxy-3-phenoxy-propylacrylat, 2-[[(Butylamino)carbonyl]oxy]ethyl acrylat und Diurethandimethacrylat.

Gemäß bevorzugter Ausführungsformen ist als radikalisch polymerisierbares Monomer oder Oligomer ein Acrylsäureester und/oder Methacrylsäureester enthalten, der wenigstens eine Hydroxy-Gruppe trägt. Beispielsweise und insbesondere ist gemäß besonders bevorzugter Ausführungsformen Hydroxyethylcaprolactonacrylat (HECLA) enthalten.

Hiermit wird ein aushärtbares Klebeband erzielt, welches gleichzeitig eine hohe Lagerstabilität aufweist, also nicht unerwünscht vorzeitig aushärtet.

Im Hinblick auf eine gute chemische Beständigkeit sind Acrylsäureester und/oder Methacrylsäureester bevorzugt, die eine Phenyl-Gruppe und eine Hydroxy-Gruppe als funktionelle Gruppen aufweisen, wie beispielsweise 2-Hydroxy-3-phenoxypropylacrylat (HPPA).

Gemäß weiterer besonders bevorzugter Ausführungsformen ist als radikalisch polymerisierbares Monomer oder Oligomer ein Acrylsäureester und/oder Methacrylsäureester enthalten, der eine Stickstoffhaltige funktionelle Gruppe, wie insbesondere eine Urethan-Gruppe, trägt.

Beispielsweise und insbesondere ist gemäß besonders bevorzugter Ausführungsformen 2-Methacryloxyethylphenylurethan (MAPU) enthalten. Solche Monomere scheinen besonders gut in Klebebändern, insbesondere kleinteiligen Stanzlingen, zu funktionieren. Ohne an die Theorie gebunden zu sein wird spekuliert, dass sich diese Monomere positiv auf die durch Luftsauerstoff gegebene Inhibierung auswirken.

Die genannten Monomere und Oligomere können gemäß bevorzugter Ausführungsformen auch in Kombination miteinander eingesetzt werden.

Gemäß besonders bevorzugter Ausführungsformen enthält die Basismasse 2-Methacryloxyethylphenylurethan (MAPU) und Hydroxyethylcaprolactonacrylat (HECLA). Hiermit wird ein aushärtbares Klebeband erzielt, welches gleichzeitig eine hohe Lagerstabilität aufweist, also nicht unerwünscht vorzeitig aushärtet. Gleichzeitig werden hohe Verklebungsfestigkeiten erzielt.

Die Basismasse der Reaktivklebemasse des erfindungsgemäßen reaktiven Klebebands umfasst bevorzugt 10 Gew.-% bis 80 Gew.-% mindestens eines radikalisch polymerisierbaren Monomers oder Oligomers b), bevorzugter umfasst die Basismasse der Reaktivklebemasse 20 Gew.-% bis 60 Gew.-% und insbesondere bevorzugt 35 Gew.-% bis 45 Gew.-% mindestens eines radikalisch polymerisierbaren Monomers oder Oligomers b), jeweils bezogen auf das Gesamtgewicht der Bestandteile der Basismasse der Reaktivklebemasse.

Die genannten Gewichtsprozentangaben beziehen sich auf das radikalisch polymerisierbare Monomer oder Oligomer oder auf die Summe aller Monomere und/oder Oligomere, falls zwei oder mehr Monomere und/oder Oligomere vorliegen. Lösemittel beziehungsweise Wasser dienen nur der Herstellung und werden in dieser Anmeldung generell nicht zur Gesamtmischung der Bestandteile des erfindungsgemäßen reaktiven Klebebands bzw. der Reaktivklebemasse bzw. der Basismasse der Reaktivklebemasse gezählt. Das gilt auch für Lösemittel, die gegebenenfalls in den kommerziell erhältlichen Rohstoffen bereits enthalten sind.

Bevorzugt beträgt in der Reaktivklebemasse des erfindungsgemäßen reaktiven Klebebands das Gewichtsverhältnis der Gesamtheit der Polymere zur Gesamtheit der radikalisch polymerisierbaren Monomere oder Oligomere 3:1 bis 1:3, stärker bevorzugt 2:1 bis 1:2, insbesondere 2:1 bis 1:1.

**c) Initiator und/oder d) Redox-Katalysator**

Die Basismasse enthält c) wenigstens einen Initiator und/oder d) wenigstens einen Redox-Katalysator.

Diese genannten Bestandteile stellen insbesondere ein Initiatorsystem dar, durch welches die Reaktion zur Aushärtung der reaktiv aushärtbaren Klebemasse ausgelöst bzw. aktiviert wird. Je nach Art der Aktivierung sind unterschiedliche Initiatoren und Redox-Katalysatoren geeignet.

Im Rahmen der vorliegenden Erfindung steht der Begriff "Initiator", insbesondere "Radikalinitiator" bzw. radikalbildende Substanz (oder auch Härter), für eine Verbindung, die eine Polymerisationsreaktion oder Vernetzung

**EP 4 588 988 A1**

der Klebemasse einleiten kann. Der Initiator, insbesondere Radikalinitiator, nimmt allerdings zu einem sehr geringen Anteil am Reaktionsgeschehen teil und bildet folglich keinen die Eigenschaften der Verklebung bestimmenden Polymeranteil.

Im Rahmen der vorliegenden Erfindung steht der Begriff "Redox-Katalysator" für eine Verbindung, die den Transfer von Elektronen zwischen chemischen Verbindungen vermitteln kann, die sonst langsamer oder gar nicht reagieren würden.

Im Rahmen der vorliegenden Erfindung steht der Begriff "Photoredox-Katalysator" für eine licht- oder UV-lichtempfindliche Verbindung, die, wenn sie durch Licht oder UV-Licht angeregt wird, den Transfer von Elektronen zwischen chemischen Verbindungen vermitteln kann, die sonst langsamer oder gar nicht reagieren würden. Im Gegensatz zu einem Photoinitiator, der beispielsweise in der EP 3910715 A1 offenbart ist, zerfällt ein Photoredox-Katalysator bei Bestrahlung mit Licht oder UV-Licht nicht in reaktive Spaltprodukte, sondern wird lediglich in einen angeregten Zustand versetzt, der in der Regel relativ langlebig ist und aus dem heraus Redox-Prozesse initiiert oder vermittelt werden können. Der Photoredox-Katalysator löst bevorzugt in der Mischung mit den radikalisch polymerisierbaren Monomeren oder Oligomeren bei Temperaturen bis 90 °C keine Polymerisation aus, auch nicht, wenn die Mischung mit UV- oder Blaulicht bestrahlt wird. Dies gilt, solange der Mischung kein Radikal-Initiator oder ein anderer initiierender Stoff zugesetzt wird.

Der Photoredox-Katalysator ist somit kein Initiator oder Radikalinitiator. Bei Bestrahlung mit UV- oder Blaulicht aktiviert er lediglich den Initiator, der dann die Polymerisation auslöst. Durch diesen verzögerten Mechanismus kommt es zu einer sogenannten Offenzeit, während der das Klebeband noch appliziert werden kann, bevor die reaktive Aushärtung beginnt.

Weder bei dem Redox-Katalysator noch bei dem Initiator handelt es sich im Rahmen der vorliegenden Erfindung um einen Initiator, der sofort mittels z.B. Licht oder Wärme aktiviert die Aushärtung auslösen könnte.

Im Rahmen der vorliegenden Erfindung sollen die Begriffe "Redox-Katalysator" und "Photoredox-Katalysator" nicht darauf beschränkt sein, dass die jeweilige Verbindung im Laufe der Reaktion nicht mit verbraucht wird.

Gemäß bevorzugter Ausführungsformen ist das erfindungsgemäße reaktive Klebeband dadurch gekennzeichnet, dass die wenigstens eine reaktiv aushärtbare Klebemasseschicht D eine lichthärtende Klebemasseschicht ist und c) wenigstens einen Initiator und d) wenigstens einen Redox-Katalysator enthält, wobei der Redox-Katalysator ein Photoredox-Katalysator ist. In einer bevorzugten Ausführungsform ist das erfindungsgemäße reaktive Klebeband dadurch gekennzeichnet, dass das über Licht aktivierbare Initiatorsystem aus Initiator und Photoredox-Katalysator eine Offenzeit von mindestens 1 Minute, bevorzugt mindestens 2 Minuten, besonders bevorzugt von mindestens 5 Minuten, aufweist. Nach der Aktivierung und Aushärtung handelt es sich bei dem dann nunmehr ausgehärteten Klebeband insbesondere nicht mehr um ein als "haftklebrig" anzusehendes Klebeband.

Bevorzugt ist der Initiator ein Radikalinitiator, wobei auch ein Gemisch von zwei oder mehreren Initiatoren denkbar ist. Es können alle im Stand der Technik bekannten Radikalinitiatoren eingesetzt werden. Bevorzugte Radikalinitiatoren sind Peroxide, Hydroperoxide und Azoverbindungen.

Gemäß besonders bevorzugter Ausführungsformen der Erfindung ist der Radikalinitiator ein organisches Peroxid. Besonders bevorzugt sind Hydroperoxide, insbesondere Diisopropylbenzol-hydroperoxid (CAS-Nr. 26762-93-6). Diisopropylbenzol-hydroperoxid wird bevorzugt in Form einer 50 gew.-%igen Lösung von Diisopropylhydroperoxid in Diisopropylbenzol, erhältlich unter dem Handelsnamen Peroxan® IHP-50 eingesetzt. $\alpha,\alpha$- Dimethylbenzylhydroperoxid, das auch als Cumolhydroperoxid (CAS-Nr. 80-15-9) bekannt ist, kann ebenfalls verwendet werden. Weiterhin können zum Beispiel auch p-Menthanhydroperoxid (CAS-Nr. 26762-92-5), tert.-Amyl-hydroperoxid (CAS-Nr. 3425-61-4) oder 1,1,3,3-Tetramethylbutyl-hydroperoxid (CAS-Nr. 5809-08-5) verwendet werden.

Bevorzugt enthält die Basismasse 0,1 Gew.-% bis 9 Gew.-%, besonders bevorzugt von 0,1 Gew.-% bis 5 Gew.-%, und besonders bevorzugt von 0,1 Gew.-% bis 2 Gew.-%, an Initiator, bevorzugt Radikalinitiator, bevorzugt ausgewählt aus Hydroperoxiden.

Als Photoredox-Katalysatoren können die dem Fachmann bekannten Photoredox-Katalysatoren eingesetzt werden. Photoredox-Katalysatoren sind häufig Übergangsmetallkomplex, der je nach Liganden neutral oder als Kation vorliegen, mit Ruthenium, Kupfer oder Iridium als Zentralatom. Als Liganden des Übergangmetallkomplexes können bevorzugt zweizähnige Liganden eingesetzt werden, insbesondere solche mit zumindest zwei miteinander verbundenen heteroaromatischen Sechsringen, etwa in Form eines Biphenyls, die ihrerseits Teil eines komplexeren Aufbaus - wie etwa polycyclisch aromatischer Kohlenwasserstoffe und/oder überbrückter - bicyclischer oder polycyclischer - aromatischer Kohlenwasserstoffe - sein können. Werden Biphenyl-Struktureinheiten enthaltende Liganden eingesetzt, kann vorteilhaft jeweils einer der aromatischen Ringe des Biphenyls einen "Zahn" des Liganden bilden, so dass die Zweizähnigkeit gegeben ist. Bicylische aromatische Verbindungen - wie Biphenylverbindungen - oder polycylisch aromatische Verbindungen als Liganden können unsubstituiert sein - also an jedem C-Atom ein Wasserstoffatom tragen - oder ein- oder mehrfach substituiert sein. Der Übergangsmetallkomplex wirkt dabei im Sinne der vorliegenden Erfindung als Photoredox-Katalysator.

Gemäß bevorzugter Ausführungsformen der Erfindung ist der Photoredox-Katalysator ein Übergangsmetallkomplex mit Ruthenium als Zentralatom und Bipyridin oder ein einfach oder mehrfach substituiertes Bipyridin-Derivat als Liganden.

In einer weiteren bevorzugten erfindungsgemäßen Ausführungsform ist der Photoredox-Katalysator ein Übergangsmetallkomplex mit Iridium als Zentralatom und Phenylpyridin oder ein einfach oder mehrfach substituiertes Phenylpyridin-Derivat als Liganden.

Bevorzugt ist damit auch ein erfindungsgemäßes reaktives Klebeband gemäß der vorstehenden Ausführungsformen, welches dadurch gekennzeichnet ist, dass der Photoredox-Katalysator Ruthenium als Zentralatom und Bipyridin oder ein einfach oder mehrfach substituiertes Bipyridin-Derivat als Liganden, oder

Iridium als Zentralatom und Phenylpyridin oder ein einfach oder mehrfach substituiertes Phenylpyridin-Derivat als Liganden, umfasst.

Bevorzugt ist der mindestens eine Photoredox-Katalysator ausgewählt aus der Gruppe bestehend aus $Ru(bpm)^{2+}$ (z.B. Tris(2,2'-bipyrimidine)ruthenium(II) dichlorid), $Ru(bpz)_3^{2+}$ (z.B. Tris(2,2'-bipyrazine)ruthenium Bis(hexafluorophosphat)), $Ru(bpy)_3^{2+}$, $Ru(phen)_3^{2+}$ (z.B.Dichloro tris(1,10-phenanthrolin)ruthenium(II) chlorid), $Ir[dF(CF_3)ppy]_2(dtbbpy)^+$ (z.B. [4,4'-*Bis*(1,1-dimethylethyl)-2,2'-bipyridin-*N*1,*N*1'] bis[3,5-difluor-2-[5-(trifluormethyl)-2-pyridinyl-*N*]phenyl-C]Iridium(III) Hexafluorphosphat), $Ir(ppy)_2(dtbbpy)^+$ (z.B. $[Ir(dtbbpy)(ppy)_2][PF_6]$), jeweils plus ein Anion oder mehrere Anionen (bzw. Gegenion(en) des Kations), wie beispielsweise Chlorid oder Hexafluorophosphat, $Ir(Fppy)_3$ oder *fac*-$Ir(ppy)_3$ (*fac*-Tris(2-phenylpyridin)iridium(III)), $Ir(ppy)_3$, und dem Kupferkomplex Dichloro-(1,10-phenanthrolin)-kupfer(II) (CAS: 14783-09-6).

Gemäß besonders bevorzugter Ausführungsformen der Erfindung ist der Photoredox-Katalysator Tris(2,2'-bipyridyl) ruthenium(II) chlorid Hexahydrat, $Ru(bpy)_3Cl_2 \cdot 6H_2O$.

Bevorzugt enthält die Basismasse bis zu 1 Gew.-%, besonders bevorzugt von 0,01 Gew.-% bis 0,5 Gew.-%, und besonders bevorzugt von 0,01 Gew.-% bis 0,1 Gew.-%, Redox-Katalysator, bevorzugt Photoredox-Katalysator, bevorzugt Photoredox-Katalysator mit Ruthenium als Zentralatom und Bipyridin oder ein einfach oder mehrfach substituiertes Bipyridin-Derivat als Liganden, oder Iridium als Zentralatom und Phenylpyridin oder ein einfach oder mehrfach substituiertes Phenylpyridin-Derivat als Liganden.

## Weitere Additive und/oder Hilfsstoffe

Die Basismasse kann gegebenenfalls weitere Additive und/oder Hilfsstoffe enthalten, die im Stand der Technik bekannt sind. Der Anteil der weiteren Additive und/oder Hilfsstoffe kann im Bereich von 0 Gew.-% bis etwa 20 Gew.-%, bevorzugt 0 Gew.-% bis etwa 15 Gew.-%, stärker bevorzugt 0 Gew.-% bis etwa 10 Gew.-%, und am stärksten bevorzugt 0 Gew.-% bis etwa 5 Gew.-% liegen.

Als weitere Additive und/oder Hilfsstoffe sind beispielsweise Füllstoffe, Farbstoffe, Keimbildner, rheologische Additive (zum Beispiel pyrogene Kieselsäure), Blähmittel, klebverstärkende Additive (Haftvermittler, insbesondere Silane und Tackifier-Harze), Compoundierungsmittel, Weichmacher und/oder Alterungs-, Licht- und UV-Schutzmittel, zum Beispiel in Form von primären und sekundären Antioxidantien zu nennen.

Insbesondere und gemäß bevorzugter Ausführungsformen beträgt der Anteil an Füllstoffen, wie beispielsweise Glaskugeln oder SiLibeads® 5211, bis zu 50 Gew.-%, insbesondere bis zu 40 Gew.-%.

Gemäß bevorzugter Ausführungsformen enthält die Reaktivklebemasse wenigstens einen rheologie-modifizierenden Füllstoff, wie insbesondere Kieselsäure, und zwar bevorzugt in einer Menge von 1 bis 10 Gew.-%, besonders bevorzugt 2 bis 5 Gew.-%.

## Reaktives Klebeband-System

Ein weiterer Gegenstand der Erfindung ist ein reaktives Klebeband-System umfassend zumindest ein erstes erfindungsgemäßes reaktives Klebeband umfassend wenigstens eine reaktiv aushärtbare Klebemasseschicht D und ein zweites reaktives Klebeband umfassend wenigstens eine reaktiv aushärtbare Klebemasseschicht, wobei die wenigstens eine reaktiv aushärtbare Klebemasseschicht D des ersten reaktiven Klebebandes wenigstens einen Initiator und bevorzugt keinen Redox-Katalysator und die wenigstens eine reaktiv aushärtbare Klebemasseschicht des zweiten reaktiven Klebebandes wenigstens einen Redox-Katalysator und bevorzugt keinen Initiator enthält, wobei das zweite reaktive Klebeband bevorzugt ebenfalls ein erfindungsgemäßes Klebeband umfassend wenigstens eine reaktiv aushärtbare Klebemasseschicht D ist

Bevorzugt ist ein reaktives Klebeband-System umfassend zumindest ein erstes erfindungsgemäßes reaktives Klebeband und ein zweites erfindungsgemäßes reaktives Klebeband, wobei die wenigstens eine reaktiv aushärtbare Klebemasseschicht D des ersten reaktiven Klebebandes wenigstens einen Initiator und die wenigstens eine reaktiv aushärtbare Klebemasseschicht D des zweiten reaktiven Klebebandes wenigstens einen Redox-Katalysator enthält.

Bei dem Initiator des erfindungsgemäßen Klebeband-Systems kann es sich um sämtliche oben genannte Initiatoren handeln, wobei sämtliche obige Ausführungen gelten.

Bevorzugt wird Eisen(II)-phthalocyanin als Redox-Katalysator eingesetzt.

Bei dem erfindungsgemäßen Klebeband-System wird die reaktive Aushärtung erst durch Inkontaktbringen des ersten erfindungsgemäßen reaktiven Klebebandes und mit dem zweiten erfindungsgemäßen reaktiven Klebeband ausgelöst bzw. aktiviert.

Auch hier ist das Initiator-System aus Redox-Katalysator und Initiator kein Photoinitiator und auch kein thermisches Initiator-System, welches durch Erwärmen aushärten könnte.

Es versteht sich, dass die reaktiv aushärtbare Klebemasseschicht D des ersten reaktiven Klebebandes bei sämtlichen Ausführungsformen des erfindungsgemäßen Klebeband-Systems keinen Redox-Katalysator enthält, der eine vorzeitige Aktivierung in der reaktiv aushärtbaren Klebemasseschicht D des ersten reaktiven Klebebandes auslöst.

Ebenso enthält die reaktiv aushärtbare Klebemasseschicht D des zweiten reaktiven Klebebandes dabei keinen Initiator, der durch den Redox-Katalysator aktiviert wird und bereits vorzeitig die Aktivierung auslöst.

Ein weiterer Gegenstand der vorliegenden Erfindung ist ein verklebter Verbund umfassend wenigstens folgende Schichten:

- Ein erstes Substrat A; und

- Ein zweites Substrat B; und

- Ein erfindungsgemäßes reaktives Klebeband oder ein erfindungsgemäßes reaktives Klebeband-Systems, welches zwischen dem Substrat A und dem Substrat B angeordnet ist und die Substrate A und B miteinander verklebt.

Ein weiterer Gegenstand der vorliegenden Erfindung ist ein Verfahren zum elektrischen Lösen des erfindungsgemäßen Verbundes, umfassend wenigstens folgende Verfahrensschritte:

i.) Anlegen einer Spannung an zwei verschiedenen Stellen des Verbundes, wobei die Spannung bevorzugt von 2 bis 50 V beträgt.

Das Anlegen der Spannung erfolgt gemäß Schritt i.) des erfindungsgemäßen Verfahrens zum elektrischen Lösen des Verbundes.

Bei der Spannung handelt es sich insbesondere um eine Gleichspannung.

Gemäß bevorzugter Ausführungsformen der Erfindung beträgt die Spannung von 3 bis 12 V. Eine derartige Spannung kann insbesondere dadurch angelegt werden, dass eine in der unmittelbaren Nachbarschaft der Verklebung befindliche Batterie verwendet wird, wie insbesondere und beispielsweise in einem Mobiltelefon, Tablet etc.

Gemäß weiterer bevorzugter Ausführungsformen der Erfindung beträgt die Spannung von 12 bis 50 V. Durch diese vergleichsweise hohe Spannung kann das Wiederablösen besonders schnell erfolgen; die Spannung, insbesondere bei bis zu 50 V, muss dabei nur für wenige Sekunden angelegt werden.

Dem Fachmann ist grundsätzlich bekannt, wie eine Spannung anzulegen ist, ohne dass es zu unerwünschten Kurzschlüssen kommt.

Die zeitliche Dauer des Anlegens der Spannung in Schritt i.) kann, insbesondere in Abhängigkeit der gewählten Spannung, von wenigen Sekunden, insbesondere 2 Sekunden, bis zu 900 Sekunden, bevorzugt bis zu 600 Sekunden, besonders bevorzugt bis zu 300 Sekunden, betragen.

Natürlich ist es auch denkbar, dass die Spannung für einen längeren Zeitraum als 900 Sekunden angelegt wird, insbesondere, wenn die Spannung vergleichsweise niedrig ist.

Durch das erfindungsgemäße Verfahren zum elektrischen Lösen des erfindungsgemäßen Verbundes lassen sich die Substrate A und B auf eine schnelle und einfache Weise voneinander lösen, ohne dass ein allzu großer Kraftaufwand erforderlich ist.

Sofern sich die Schichten nach Anlegen der Spannung nicht ohne weitere Einwirkung voneinander lösen, umfasst das erfindungsgemäße Verfahren wenigstens den weiteren Verfahrensschritt:

ii.) Krafteinwirkung auf die Klebemasseschicht D und/oder das Substrat A und/oder das Substrat B, sodass der Abstand zwischen den Substraten A und B vergrößert wird.

Die Kraft, die gemäß Schritt ii.) eventuell noch erforderlich ist, ist deutlich geringer als vor dem Anlegen der Spannung gemäß Schritt i.)

Das Anlegen der Spannung gemäß Schritt i.) erfolgt an zwei verschiedenen Stellen des erfindungsgemäßen verklebten Verbundes. An welche Stellen die Spannung zweckmäßig angelegt wird, hängt vom Aufbau des Klebebandes oder des Klebeband-Systems und des verklebten Verbundes und somit der Beschaffenheit der einzelnen Schichten und miteinander verklebten Substrate A und B ab.

Im Folgenden werden einige bevorzugte Ausführungsformen ausgeführt.

Gemäß bevorzugter Ausführungsformen ist das erfindungsgemäße reaktive Klebeband ein Transferklebeband und besteht aus der Klebemasseschicht D.

Ein solches Klebeband kann in einem verklebten Verbund mit zwei Substraten A und B vorteilhafterweise dadurch elektrisch wieder gelöst werden, dass beide Substrate A und B elektrisch leitfähig sind. Hierzu wird dann eine Spannung an die Substrate A und B angelegt, sodass es in der Klebemasse zu einer Wanderung von Anionen zur Anode und von Kationen zur Kathode kommt. Ohne an eine bestimmte Theorie gebunden sein zu wollen, wird von den Erfindern folgender Mechanismus angenommen: Durch das Anlegen der Spannung erfolgt eine Wanderung des Elektrolyten, insbesondere eine Trennung der Anionen und Kationen einer ionischen Flüssigkeit, in der Klebemasseschicht D. Hierdurch wird die Adhäsion der Klebemasseschicht D an das Substrat A und das Substrat B stark herabgesetzt und es erfolgt ein Lösen dieser Schichten voneinander.

Die Klebemasseschicht D enthält hierbei gemäß bevorzugter Ausführungsformen der Erfindung wenigstens einen Initiator und wenigstens einen Redox-Katalysator, der bevorzugt wenigstens ein Photoredox-Katalysator ist, wobei die Klebemasseschicht D bevorzugt mittels Licht reaktiv aushärtbar ist.

Ebenso ist es gemäß bevorzugter Ausführungsformen denkbar zwei Substrate A und B mittels des erfindungsgemäßen Klebeband-Systems miteinander zu verkleben, wobei das erste und das zweite Klebeband jeweils als Transferklebeband verwendet werden und aus der jeweiligen reaktiv aushärtbaren Klebemasseschicht D bestehen. Hierbei enthält beispielsweise die reaktiv aushärtbare Klebemasseschicht D des ersten Klebebandes wenigstens einen Initiator und bevorzugt keinen Redox-Katalysator, während die reaktiv aushärtbare Klebemasseschicht D des zweiten Klebebandes wenigstens einen Redox-Katalysator und bevorzugt keinen Initiator enthält.

Das erste und/oder das zweite Klebeband des Klebeband-Systems können dabei permeable Trägerstrukturen enthalten, die weiterhin die Wanderung des Elektrolyten sowie des Initiators und/oder Redox-Katalysators ermöglichen, sodass die reaktive Aushärtung beim Inkontaktbringen der beiden Klebebänder miteinander nicht beeinträchtigt ist.

Derartige permeable Trägerstrukturen können insbesondere Gewebe, Gestricke aus textilen Fasern oder Metalldrähten sein, wobei textile Fasern auch mittels Metalls beschichten sein können.

Geeignet sind beispielsweise die unten beschriebenen Optionen b) elektrisch leitfähige Textilien aufweisend wenigstens ein Metall, bevorzugt ausgewählt aus der Gruppe bestehend aus Kupfer und Nickel, und/oder d) wenigstens ein Gitter aus Metall.

Das elektrische Wiederablösen erfolgt dann beispielsweise analog an den leitfähigen Substraten A und B.

Gemäß bevorzugter Ausführungsformen der vorliegenden Erfindung umfasst der verklebte Verbund somit folgende Schichten:

- Ein erstes Substrat A, welches elektrisch leitfähig ist; und

- Ein zweites Substrat B, welches elektrisch leitfähig ist; und

- Ein erfindungsgemäßes Klebeband, welches aus der Klebemasseschicht D besteht und zwischen dem Substrat A und dem Substrat B angeordnet ist und die Substrate A und B miteinander verklebt, oder
Ein erfindungsgemäßes Klebeband-System, welches aus zwei erfindungsgemäßen Transferklebebändern durch Inkontaktbringen der Bänder miteinander gebildet ist, von denen das erste vor dem Inkontaktbringen wenigstens einen Initiator und bevorzugt keinen Redox-Katalysator, und das zweite vor dem Inkontaktbringen wenigstens einen Redox-Katalysator und bevorzugt keinen Initiator enthält, wobei das Klebeband-System zwischen dem Substrat A und dem Substrat B angeordnet ist und die Substrate A und B miteinander verklebt.

Gemäß weiterer bevorzugter Ausführungsformen umfasst das erfindungsgemäße reaktive Klebeband zusätzlich zur ersten Klebemasseschicht D wenigstens eine zweite Klebemasseschicht C.

Gemäß besonders bevorzugter Ausführungsformen der Erfindung ist die zweite Klebemasseschicht C dabei elektrisch leitfähig. Ein derartiger Aufbau hat den Vorteil, dass die Spannung an die Klebemasseschicht C angelegt werden kann, sodass auch ein nichtleitfähiges Substrat, hier Substrat B, elektrisch wieder gelöst werden kann.

Gemäß bevorzugter Ausführungsformen der Erfindung überragt die Klebemasseschicht C das an sie gebundene Substrat dabei seitlich, sodass an die Schicht C von oben, also neben dem Substrat, eine Spannung angelegt werden kann.

Gemäß bevorzugter Ausführungsformen der Erfindung weist das an die Schicht C gebundene Substrat, hier Substrat B, ein Loch auf, sodass auch hier die Klebemasseschicht C das an sie gebundene Substrat seitlich überragt. Auch hier kann an die Schicht C von oben, also neben dem Substrat, eine Spannung angelegt werden.

Die genannten Möglichkeiten sind insbesondere dann von Vorteil, wenn die Schicht C so dünn ausgestaltet ist, dass ein seitliches Anlegen an die Schicht nicht praktikabel ist. Andernfalls kann aber auch eine entsprechend dünn ausgestaltete Elektrode verwendet werden.

Gemäß besonders bevorzugter Ausführungsformen der Erfindung ist die zweite Klebemasseschicht C dabei ebenfalls eine reaktiv aushärtbare Klebemasseschicht. Hierdurch kann das Klebeband weiterhin bei solchen Substraten bzw. Anwendungen verwendet werden, wo ein reaktiv aushärtbares, insbesondere bei Raumtemperatur strukturell aushärtbares, Klebeband mit hohen Verklebungsfestigkeiten gewünscht ist. Zudem sind die erste und zweite Klebemasseschicht D und C somit besonders kompatibel.

Die Klebemasseschicht D enthält hierbei gemäß bevorzugter Ausführungsformen der Erfindung wenigstens einen Initiator und wenigstens einen Redox-Katalysator, der bevorzugt wenigstens ein Photoredox-Katalysator ist, wobei die Klebemasseschicht D bevorzugt mittels Licht reaktiv aushärtbar ist.

Bevorzugt besteht das Klebeband gemäß der vorstehend beschriebenen Ausführungsformen aus den Schichten D und C. Der Aufbau umfassend die zweite Klebemasseschicht wird im Folgenden auch als Zweischichtverbund D-C bezeichnet.

Gemäß bevorzugter Ausführungsformen weist die Schicht D in der xy-Ebene die gleichen Dimensionen auf wie die Schicht C, sodass D und C als Zweischichtverbund gemeinsam verarbeitet und zum Beispiel gestanzt werden können.

Gemäß bevorzugter Ausführungsformen der vorliegenden Erfindung umfasst der verklebte Verbund somit folgende Schichten:

- Ein erstes Substrat A, welches elektrisch leitfähig ist; und

- Ein zweites Substrat B; und

- Ein erfindungsgemäßes Klebeband, welches aus dem Zweischichtverbund D-C besteht und die Substrate A und B so miteinander verklebt, dass die Klebemasseschicht D an das leitfähige Substrat A gebunden ist.

Das Substrat B muss hierbei nicht elektrisch leitfähig sein, wie oben beschrieben. Gemäß bevorzugter Ausführungsformen ist das Substrat B hierbei nicht elektrisch leitfähig.

Auch hier ist es denkbar, dass das erfindungsgemäße Klebeband-System zur Verklebung verwendet wird.

Ferner ist es gemäß vorteilhafter Ausführungsformen denkbar, dass ein Klebeband-System verwendet wird, welches eine erste reaktiv aushärtbare Klebemasseschicht D enthaltend wenigstens einen Elektrolyten sowie wenigstens einen Initiator und keinen Redox-Katalysator oder einen Redox-Katalysator und keinen Initiator aufweist und welches eine zweite reaktiv aushärtbare Klebemasseschicht C ohne Elektrolyten aufweist, wobei die zweite reaktiv aushärtbare Klebemasseschicht komplementär zur ersten Schicht entweder wenigstens einen Redox-Katalysator und keinen Initiator oder wenigstens einen Initiator und keinen Redox-Katalysator enthält.

Gemäß weiterer bevorzugter Ausführungsformen der vorliegenden Erfindung umfasst der verklebte Verbund somit folgende Schichten:

- Ein erstes Substrat A, welches elektrisch leitfähig ist; und
- Ein zweites Substrat B; und
- Ein erfindungsgemäßes Klebeband-System, welches wenigstens eine erfindungsgemäße reaktiv aushärtbare Klebemasseschicht D aufweist.

Gemäß weiterer bevorzugter Ausführungsformen umfasst das Klebeband zusätzlich zur ersten Klebemasseschicht D wenigstens die folgenden Schichten:

- Eine zweite Klebemasseschicht C; und

- wenigstens eine elektrisch leitfähige Trägerschicht T, die zwischen den Schichten D und C angeordnet ist.

Ein derartiges Klebeband kann als doppelseitiges Klebeband über die zweite Klebemasseschicht C an eine Vielzahl unterschiedlicher Substrate angepasst werden. Hierbei kann es sich prinzipiell um die gleichen Substrate handeln wie gemäß der vorherigen Ausführungsformen, in denen das Klebeband ein Transferklebeband ist.

Ein derartiges Klebeband kann zudem aber insbesondere und vorteilhafterweise auch verwendet werden, um später Substrate A und B voneinander zu lösen, von denen nur eines elektrisch leitfähig ist, zum Beispiel das Substrat A.

Gemäß bevorzugter Ausführungsformen sind entweder xi.) nur die Trägerschicht T oder xii.) die Trägerschicht T und die zweite Klebemasseschicht C elektrisch leitfähig ausgestaltet.

Hierdurch kann eine Spannung an xi.) die elektrisch leitfähige Trägerschicht oder xii.) an die zweite Klebemasseschicht C sowie an das leitfähige Substrat A angelegt werden.

Das Klebeband wird zuvor vorteilhafterweise als doppelseitiges Klebeband so verklebt, dass die elektrisch lösbare Klebemasseschicht D an das leitfähige Substrat A gebunden ist und die zweite Klebemasseschicht an das Substrat B, welches leitfähig sein kann, aber nicht muss.

Ohne an eine bestimmte Theorie gebunden sein zu wollen, wird von den Erfindern folgender Mechanismus angenommen: Durch das Anlegen der Spannung erfolgt eine Wanderung des Elektrolyten, insbesondere eine Trennung der Anionen und Kationen einer ionischen Flüssigkeit, in der Klebemasseschicht D. Hierdurch wird die Adhäsion der Klebemasseschicht D an das Substrat A stark herabgesetzt und es erfolgt ein Lösen dieser Schichten voneinander. Gemäß bevorzugter Ausführungsformen der Erfindung ist xi.) nur die Trägerschicht elektrisch leitfähig. Hieran kann besonders gut eine Spannung angelegt werden, insbesondere und bevorzugt, wenn die Trägerschicht wenigstens eine der Klebemasseschichten seitlich überragt.

Gemäß weiterer bevorzugter Ausführungsformen der Erfindung sind xii.) die Trägerschicht und die zweite Klebemasseschicht C elektrisch leitfähig. Ein derartiger Aufbau hat den Vorteil, dass die Spannung an die Klebemasseschicht C angelegt werden kann. Ein seitlicher Überstand der Trägerschicht ist nicht notwendig. Das Klebeband lässt sich daher auf einfache Weise herstellen, insbesondere da die Schichten D, T und C gemeinsam gestanzt werden können.

Bevorzugt besteht das Klebeband gemäß der vorstehend beschriebenen Ausführungsformen aus den drei Schichten D, T und C. Hierfür wird im Rahmen der vorliegenden Anmeldung auch der Begriff Dreischichtverbund D-T-C verwendet.

Gemäß bevorzugter Ausführungsformen der vorliegenden Erfindung umfasst der verklebte Verbund somit folgende Schichten:

- Ein erstes Substrat A, welches elektrisch leitfähig ist; und

- Ein zweites Substrat B; und

- Ein erfindungsgemäßes Klebeband, welches aus dem Dreischichtverbund D-T-C besteht und die Substrate A und B so miteinander verklebt, dass die Klebemasseschicht D an das leitfähige Substrat A gebunden ist.

Auch hier ist es denkbar, dass das erfindungsgemäße Klebeband-System zur Verklebung verwendet wird.

Gemäß weiterer bevorzugter Ausführungsformen der vorliegenden Erfindung umfasst der verklebte Verbund somit folgende Schichten:

- Ein erstes Substrat A, welches elektrisch leitfähig ist; und

- Ein zweites Substrat B; und

- Ein erfindungsgemäßes Klebeband-System, welches aus zwei erfindungsgemäßen reaktiven Klebebändern durch Inkontaktbringen der Klebebänder miteinander gebildet ist, von denen das erste Klebeband den Dreischichtverbund D-T-C umfasst, und das zweite Klebeband wenigstens eine erfindungsgemäße reaktiv aushärtbare Klebemasseschicht D aufweist, wobei die Klebemasseschicht D des ersten Klebebandes vor dem Inkontaktbringen wenigstens einen Initiator und bevorzugt keinen Redox-Katalysator, und die Klebemasseschicht D des zweiten Klebebandes vor dem Inkontaktbringen wenigstens einen

Redox-Katalysator und bevorzugt keinen Initiator enthält, und wobei das Klebeband-System die Substrate A und B miteinander verklebt.

Das zweite Klebeband kann gemäß dieser Ausführungsformen vor dem Inkontaktbringen ein Transferklebeband bestehend aus der Klebemasseschicht D enthaltend den wenigstens einen Redox-Katalysator sein. Hierbei wird das Klebeband-System bevorzugt so verklebt, dass die Klebemasseschicht D des zweiten Klebebandes an das leitfähige Substrat A gebunden ist.

Das zweite Klebeband kann ferner gemäß dieser Ausführungsformen vor dem Inkontaktbringen ein Zweischichtverbund D-C sein, bei dem die Klebemasseschicht D den wenigstens einen Redox-Katalysator enthält.

Das zweite Klebeband kann ferner ebenfalls den Dreischichtverbund D-T-C umfassen, wobei sämtliche Ausführungen analog gelten.

Bevorzugt ist die Klebemasseschicht C sämtlicher vorstehend beschriebener Ausführungsformen eine mittels Licht reaktiv aushärtbare Klebemasseschicht und enthält hierzu wenigstens einen Initiator und wenigstens einen Redox-Katalysator, der wenigstens ein Photoredox-Katalysator ist.

Gemäß weiterer bevorzugter Ausführungsformen umfasst das Klebeband zusätzlich zur ersten Klebemasseschicht D wenigstens die folgenden Schichten:

- Eine zweite Klebemasseschicht C; und

- wenigstens eine erste elektrisch leitfähige Trägerschicht T, die zwischen den Schichten D und C angeordnet ist; und

- wenigstens eine zweite elektrisch leitfähige Trägerschicht T', die auf der der ersten elektrisch leitfähigen Trägerschicht T gegenüberliegenden Fläche der Klebemasseschicht D angeordnet ist; und

- Eine dritte Klebemasseschicht C', die auf der der ersten Klebemasseschicht D gegenüberliegenden Fläche der zweiten elektrisch leitfähigen Trägerschicht T' angeordnet ist.

Ein derartiges Klebeband hat wenigstens den Schichtaufbau C-T-D-T'-C' und kann als doppelseitiges Klebeband über die Klebemasseschichten C und C' an eine Vielzahl unterschiedlicher Substrate angepasst werden.

Hierbei kann es sich prinzipiell um die gleichen Substrate handeln wie gemäß der vorherigen Ausführungsformen, in denen das Klebeband ein Transferklebeband ist oder den Dreischichtaufbau D-T-C hat.

Ein derartiges Klebeband kann insbesondere und vorteilhafterweise aber auch verwendet werden, um später Substrate A und B voneinander zu lösen, von denen keines elektrisch leitfähig ist.

Gemäß bevorzugter Ausführungsformen sind entweder xi.) nur die Trägerschichten T und T' oder xii.) die Trägerschichten T und T' und die zweite Klebemasseschicht C und/oder die dritte Klebemasseschicht C' elektrisch leitfähig ausgestaltet.

Hierdurch kann eine Spannung an xi.) die beiden elektrisch leitfähigen Trägerschichten oder xii.) an wenigstens eine der Klebemasseschichten C und C' und an eine der Trägerschichten oder die andere Klebemasseschicht angelegt werden.

Analog zu obigen Ausführungsformen wird angenommen, dass durch das Anlegen der Spannung eine Wanderung des Elektrolyten, insbesondere eine Trennung der Anionen und Kationen einer ionischen Flüssigkeit, in der Klebemasseschicht D erfolgt. Hierdurch wird die Adhäsion der Klebemasseschicht D an die elektrisch leitfähigen Trägerschichten T und T' stark herabgesetzt und es erfolgt ein Lösen dieser Schichten voneinander.

Gemäß bevorzugter Ausführungsformen der Erfindung sind xi.) nur die Trägerschichten T und T' elektrisch leitfähig. Hieran kann besonders gut eine Spannung angelegt werden, insbesondere und bevorzugt, wenn die Trägerschichten T und T' wenigstens eine der jeweils benachbarten Klebemasseschichten seitlich überragen.

Gemäß weiterer bevorzugter Ausführungsformen der Erfindung sind xii.) die Trägerschichten T und T' und die zweite und die dritte Klebemasseschicht C bzw. C' elektrisch leitfähig. Ein derartiger Aufbau hat den Vorteil, dass die Spannung an die Klebemasseschichten C und C' angelegt werden kann. Ein seitlicher Überstand der Trägerschichten T und T' ist nicht notwendig. Das Klebeband lässt sich daher auf einfache Weise herstellen, insbesondere da die Schichten C, T, D, T' und C' gemeinsam gestanzt werden können.

Bevorzugt besteht das Klebeband gemäß der vorstehend beschriebenen Ausführungsformen aus den fünf Schichten C, T, D, T' und C'. Hierfür wird im Rahmen der vorliegenden Anmeldung auch der Begriff Fünfschichtverbund C-T-D-T'-C' verwendet.

Bevorzugt sind die Klebemasseschichten C, D und C' hierbei jeweils mittels Licht reaktiv aushärtbare Klebemasseschichten und enthalten hierzu wenigstens einen Initiator und wenigstens einen Redox-Katalysator, der wenigstens ein Photoredox-Katalysator ist.

Gemäß bevorzugter Ausführungsformen der vorliegenden Erfindung umfasst der verklebte Verbund somit folgende Schichten:

- Ein erstes Substrat A; und

- Ein zweites Substrat B; und

- Ein erfindungsgemäßes Klebeband, welches aus dem Fünfschichtverbund C-T-D-T'-C' besteht und die Substrate A und B miteinander verklebt.

Ebenso ist es denkbar, dass im verklebten Verbund die Verklebung der Substrate A und B durch das erfindungsgemäße Klebeband-System hergestellt ist, bei dem das erste Klebeband vor dem Inkontaktbringen den Aufbau C-T-D aufweist und das zweite den Aufbau D-T'-C', wobei die Klebemasseschicht D des ersten Klebebandes vor dem Inkontaktbringen wenigstens einen Initiator und bevorzugt keinen Redox-Katalysator, und die Klebemasseschicht D des zweiten Klebebandes vor dem Inkontaktbringen wenigstens einen Redox-Katalysator und bevorzugt keinen Initiator enthält.

Das elektrisch leitfähige Substrat sämtlicher Ausführungsformen kann beispielsweise ein Gehäuse aus Metall von einem Mobiltelefon sein.

Bei dem elektrisch nicht leitfähigen Substrat sämtlicher Ausführungsformen kann es sich insbesondere um ein Gehäuse aus einem nicht leitfähigen Material, wie Plastik, oder eine Batterie oder andere nicht elektrisch leitfähig ausgestaltete Bauteile handeln, wie beispielsweise Lautsprecher.

Ein weiterer Gegenstand der vorliegenden Erfindung ist die Verwendung des erfindungsgemäßen Klebebands oder des erfindungsgemäßen Klebeband-Systems zur Verklebung von Bauteilen in elektronischen, optischen oder feinmechanischen Geräten, Automobilen, medizinischen Geräten und zahnmedizinischen Geräten.

Bevorzugt ist die Verwendung des erfindungsgemäßen reaktiven Klebebandes oder Klebeband-Systems zur Herstellung von Verklebungen auf Materialien ausgewählt aus Kunststoff, Metall, Glas oder Keramik und die Verwendung des erfindungsgemäßen reaktiven Klebebandes oder Klebeband-Systems als Klebemittel in der Herstellung elektronischer, optischer oder feinmechanischer Geräte.

Derartige portable Geräte sind insbesondere:

Fotoapparate, Digitalkameras, Fotografie-Zubehörgeräte (wie Belichtungsmesser, Blitzlichtgeräte, Blenden, Fotogehäuse, Objektive etc.), Filmkameras, Videokameras Kleincomputer (Mobilcomputer, Taschencomputer, Taschenrechner), Laptops, Notebooks, Netbooks, Ultrabooks, Tablet-Computer, Handhelds, elektronische Terminkalender und Organisatoren (sogenannte "Electronic Organizer" oder "Personal Digital Assistants", PDA, Palmtops), Modems;

Computer-Zubehörgeräte und Bedieneinheiten für elektronische Geräte, wie Mäuse, Zeichenpads, Grafiktabletts, Mikrophone, Lautsprecher, Spielkonsolen, Gamepads, Fernsteuerungen, Fernbedienungen, Tastfelder ("Touchpads");

Monitore, Displays, Bildschirme, berührungsempfindliche Bildschirme (Sensorbildschirme, "Touchscreen-Geräte"), Beamer;

Lesegeräte für elektronische Bücher ("E-Books");

Kleinfernsehgeräte, Taschenfernseher, Filmabspielgeräte, Videoabspielgeräte Radios (auch Klein- und Taschenrundfunkgeräte), Walkmen, Discmen, Musikabspielgeräte für zum Beispiel CD, DVD, Blue-Ray, Kassetten, USB, MP3, Kopfhörer Schnurlose Telefone, Mobiltelefone, Smartphones, Funksprechgeräte, Freisprechgeräte, Personenrufgeräte (Pager, Pieper); Mobile Defibrillatoren, Blutzuckermessgeräte, Blutdruckmessgeräte, Schrittzähler, Pulsmesser;

Taschenlampen, Laserpointer;

Mobile Detektoren, optische Vergrößerungsgeräte, Fernsichtgeräte, Nachtsichtgeräte, GPS-Geräte, Navigationsgeräte, tragbare Schnittstellengeräte der Satellitenkommunikation; Datenspeichergeräte (USB-Sticks, externe Festplatten, Speicherkarten); und Armbanduhren, Digitaluhren, Taschenuhren, Kettenuhren, Stoppuhren.

Die Trägerschichten T sowie T und T' sämtlicher vorstehend genannter Ausführungsformen sind elektrisch leitfähig.

Im Folgenden werden diese Schichten weiter ausgeführt. Der Einfachheit halber wird der Begriff "elektrisch leitfähige Trägerschicht" oder auch nur "Trägerschicht" verwendet. Dieser bezieht sich je nach den obigen Ausführungsformen auf die Trägerschicht T oder die Trägerschichten T und T'.

Die Trägerschichten T und T' sind unabhängig voneinander und können gleich oder verschieden voneinander ausgeführt sein.

Bevorzugt umfasst die elektrisch leitfähige Trägerschicht wenigstens ein Metall.

Besonders bevorzugt ist das Metall ausgewählt aus der Gruppe bestehend aus Kupfer, Nickel, Zink, Zinn, Silber, Gold, Aluminium, Eisen, Chrom und Legierungen dieser genannten Metalle. Ganz besonders bevorzugt ist das Metall ausgewählt aus der Gruppe bestehend aus Aluminium, Zink, Kupfer und Nickel. Ganz besonders bevorzugt ist Aluminium.

Bevorzugt weist die elektrisch leitfähige Trägerschicht eine Schichtdicke, gemessen in z-Richtung, also parallel zur Stapelrichtung der Schichtanordnung, von 10 nm (Nanometer) bis 50 $\mu$m (Mikrometer) auf.

Die elektrisch leitfähige Trägerschicht weist gemäß bevorzugter Ausführungsformen der Erfindung a) wenigstens eine Metallfolie, bevorzugt eine Aluminiumfolie, und/oder b) wenigstens ein elektrisch leitfähiges Textil aufweisend wenigstens ein Metall, bevorzugt ausgewählt aus der Gruppe bestehend aus Kupfer und Nickel, und/oder c) eine oder mehrere Lagen wenigstens eines aufgedampften Metalls, bevorzugt ausgewählt aus der Gruppe bestehend aus Kupfer und Aluminium, und/oder d) wenigstens ein Gitter aus Metall und/oder e) eine mit Metall bedampfte Folie auf.

Es ist dabei prinzipiell auch denkbar, dass die Schicht T eine Kombination von zwei oder mehreren der genannten Möglichkeiten aufweist.

Metallfolien, wie beispielsweise und bevorzugt Aluminiumfolien, sind dem Fachmann bekannt. Bevorzugt weist die Metallfolie, beispielsweise und bevorzugt die Aluminiumfolie, eine Schichtdicke, gemessen in z-Richtung, also parallel zur Stapelrichtung der Schichtanordnung, von 5 bis 50 $\mu$m, besonders bevorzugt von 10 bis 30 $\mu$m auf.

Elektrisch leitfähige Textilien sind dem Fachmann bekannt, insbesondere unter dem englischen Ausdruck "conductive mesh". Hierbei handelt es sich um ein textiles Gewebe, zum Beispiel aus PET (Polyethylenterephthalat), welches mit einem Metall, zum Beispiel mit Kupfer und/oder Nickel, beschichtet ist, wodurch die elektrische Leitfähigkeit des Gewebes hergestellt ist.

Dem Fachmann ist ebenfalls bekannt, dass Metalle direkt als Monolage oder Mehrfachlage auf Flächen, wie hier die Oberfläche einer Klebemasseschicht aufgedampft werden können. Im Rahmen der vorliegenden Erfindung kann die elektrisch leitfähige Trägerschicht durch Aufdampfen von Metall auf die Klebemasseschicht D oder die Klebemasseschicht C oder die Klebemasseschicht C' bereitgestellt werden.

Ferner sind dem Fachmann Gitter aus Metall unterschiedlicher Dimensionen bekannt. Metallgitter mit geeigneten Schichtdicken können beispielsweise durch ein Gelege aus entsprechend dünnen Metallfäden oder durch Stanzen wenigstens einer Folie entsprechender Schichtdicke hergestellt sein.

Bei einer mit Metall bedampften Folie wird insbesondere eine nicht leitfähige Folie mit Metall bedampft, um diese elektrisch leitfähig auszubilden. Das Material der Folie kann prinzipiell ausgewählt sein aus sämtlichen Materialien, die dazu geeignet sind mit Metall bedampft zu werden und als Trägerfolie in Klebebändern verwendet zu werden. Das Material ist insbesondere ausgewählt aus Polyestern und Polyolefinen, wobei auch eine Mischung mehrerer Materialien denkbar ist. Als Polyester sind insbesondere Polyethylenterephthalat (PET) und Polyethylennaphthalat (PEN) bevorzugt. Als Polyolefine sind insbesondere Polypropylen (PP), Polyethylen (PE) bevorzugt. Gemäß bevorzugter Ausführungsformen ist das Material der Folie ausgewählt aus der Gruppe bestehend aus PET, PEN, PE, PP. Bevorzugt handelt es sich um eine Folie aus PET (Polyethylenterephthalat). Eine derartige Folie ist dimensionsstabil und somit gut verarbeitbar, ohne sich signifikant zu dehnen oder zu zerreißen. Hierdurch ist es möglich eine homogene und lückenlose Metallschicht dauerhaft aufzubringen, sodass die elektrische Leitfähigkeit, insbesondere in z-Richtung, über die gesamte Folie dauerhaft gewährleistet ist.

In den Ausführungsformen, in denen wenigstens eine elektrisch leitfähige Trägerschicht T oder wenigstens zwei elektrisch leitfähige Trägerschichten T und T' vorhanden sind, ist es bevorzugt, dass diese wenigstens eine benachbarte Klebemasseschicht in wenigstens einer Erstreckungsrichtung der Schichtebene seitlich überragen und somit einen seitlichen Überstand aufweisen. An diesen seitlichen Überstand kann dann auf einfache Weise eine Spannung angelegt werden.

Im Fall des Fünfschichtverbundes sind die seitlichen Überstände der elektrisch leitfähigen Trägerschichten T und T' gemäß vorteilhafter Ausführungsformen räumlich getrennt voneinander angeordnet. Dies erleichtert es eine Spannung an diese beiden Überstände anzulegen.

Im Fall von aufgedampftem Metall als Trägerschicht ist es bevorzugt, dass diese Trägerschicht nur eine benachbarte Klebemasseschicht in wenigstens einer Erstreckungsrichtung der Schichtebene seitlich überragt und die jeweils andere Klebemasseschicht als mechanische Stütze dieser Metallschicht dient. Hierbei hat die Metallschicht keine eigentliche Trägerfunktion. Stattdessen fungiert die andere Klebemasseschicht als Träger für die Metallschicht. Der Einfachheit halber wird der Begriff Trägerschicht für die Metallschicht aber auch in diesen Ausführungsformen beibehalten. Bevorzugt beträgt die Schichtdicke der Schicht T in diesem Fall größer oder gleich 10 nm (Nanometer), bevorzugt 50 bis 200 nm.

Gemäß bevorzugter Ausführungsformen der Erfindung weist die elektrisch leitfähige Trägerschicht T bzw. T und/oder T' a) wenigstens eine Metallfolie, bevorzugt eine Aluminiumfolie, und/oder b) wenigstens ein elektrisch leitfähiges Textil aufweisend wenigstens ein Metall, bevorzugt ausgewählt aus der Gruppe bestehend aus Kupfer und Nickel, und/oder d) wenigstens ein Gitter aus Metall und/oder e) eine mit Metall bedampfte Folie auf, und überragt die erste Klebemasseschicht D und die zweite Klebemasseschicht C oder die erste Klebemasseschicht D und die zweite Klebemasseschicht C und/oder die erste Klebemasseschicht D und die dritte Klebemasseschicht C' in wenigstens einer Erstreckungsrichtung.

Hierdurch kann auf einfache und sichere Weise eine Spannung an die Trägerschicht angelegt werden. Gleichzeitig kann das Klebeband auf vergleichsweise einfache Weise hergestellt werden.

Gemäß bevorzugter Ausführungsformen der Erfindung weist die elektrisch leitfähige Trägerschicht T bzw. T und/oder T' eine oder mehrere Lagen, bevorzugt eine Lage, wenigstens eines aufgedampften Metalls, bevorzugt ausgewählt aus der Gruppe bestehend aus Kupfer und Aluminium, auf.

Gemäß besonders bevorzugter Ausführungsformen der Erfindung weist die elektrisch leitfähige Trägerschicht T bzw. T und/oder T' e) eine mit Metall bedampfte Folie auf, und überragt die erste Klebemasseschicht D in wenigstens einer Erstreckungsrichtung. Hierbei ist die Folie insbesondere auf einer Oberfläche mit Metall bedampft und die jeweilige Trägerschicht über die metallisierte Fläche an die erste Klebemasseschicht D, und damit an die elektrisch ablösbare Schicht, gebunden.

Hierdurch kann auf einfache und sichere Weise eine Spannung an die Trägerschicht angelegt werden.

Unter dem Ausdruck "seitlich überragen" ist im Rahmen der vorliegenden Erfindung jegliche Art von seitlichem Überstand der angesprochenen Schicht oder Schichten gemeint und bedeutet, dass sich die jeweils angesprochene Schicht insbesondere in der "xy"-Ebene und somit seitlich - senkrecht zur Stapelrichtung - weiter erstreckt als die Bezugsschicht. Anstelle des Begriffes "seitlicher Überstand" werden im Rahmen der vorliegenden Erfindung auch die Begriffe "seitliche Verlängerung" oder "seitlicher Verlängerungsabschnitt" verwendet.

Der Begriff "seitlich" ist hier auf jede Erstreckungsrichtung der Schichtebene "xy" senkrecht zur Stapelrichtung der Schichten "z" bezogen. Der Begriff ist damit insbesondere unabhängig von der geometrischen Form des Klebebandes in der "xy"-Ebene, welche zum Beispiel ein Rechteck, wie für Klebebänder üblich (s. oben), aber auch ein Quadrat oder ein Kreis sein kann.

Geringfügige Schwankungen der Maße der einzelnen Schichten in der "xy"-Ebene, die sich aufgrund des Stanzverfahrens oder ähnlichen formgebenden Verfahren ergeben, sind hiermit nicht angesprochen, insbesondere da solche geringfügigen Materialüberstände aufgrund der Dimensionen nicht dazu geeignet sind, planmäßig eine Spannung daran anzulegen.

Die Klebemasseschichten C bzw. C und C' können prinzipiell auf den gleichen Massen basieren wie die Klebemasseschicht D, wobei die Klebemassen der Schichten C bzw. C und C' keine Elektrolyten enthalten müssen, aber können. Bevorzugt enthalten die Schichten C bzw. C und C' keine Elektrolyten.

Gemäß einiger oben beschriebener Ausführungsformen des Zweischichtverbundes D-C ist die Klebemasseschicht C elektrisch leitfähig.

Gemäß einiger oben beschriebener Ausführungsformen des Dreischichtverbundes D-T-C ist die Klebemasseschicht C elektrisch leitfähig.

Gleichermaßen kann auch die Klebemasseschicht C und/oder die Klebemasseschicht C' des Fünfschichtverbundes C-T-D-T'-C' elektrisch leitfähig ausgestaltet sein.

Im Folgenden werden diese Schichten weiter ausgeführt. Der Einfachheit halber wird an geeigneten Stellen der Begriff "elektrisch leitfähige Klebemasseschicht" verwendet. Dieser bezieht sich je nach den obigen Ausführungsformen auf die Klebemasseschicht C oder die Klebemasseschichten C und/oder C'. Ferner wird der Einfachheit halber der Ausdruck "die Klebemasseschichten C bzw. C und/oder C'" verwendet, womit die jeweiligen Schichten in den beschriebenen Ausführungsformen des Klebebandes umfassend wenigstens den Zweischichtverbund, Dreischichtverbund oder wenigstens den Fünfschichtverbund gemeint sind.

Die Klebemasseschichten C und C' sind unabhängig voneinander und können gleich oder verschieden voneinander sein.

Sämtliche Ausführungen gelten auch für das erfindungsgemäße Klebeband-System.

Bevorzugt enthält die elektrisch leitfähige Klebemasseschicht hierzu wenigstens ein Metall, wie insbesondere Nickel, Kupfer, Silber, bevorzugt in Form von elektrisch leitfähigen Metallpartikeln und/oder metallisierten Partikeln, besonders bevorzugt Metallpartikeln. Metallisierte Partikel sind insbesondere und bevorzugt Glas- oder Polymerpartikel, die mit wenigstens einem Metall metallisiert sind, sodass die zuvor elektrisch nicht leitfähigen Partikel durch die Metallisierung elektrisch leitfähig ausgestaltet sind.

Besonders bevorzugt enthält die elektrisch leitfähige Klebemasseschicht elektrisch leitfähige Partikel, die ausgewählt sind aus der Gruppe bestehend aus Nickelpartikeln, Kupferpartikeln und versilberten Kupferpartikeln.

Gemäß besonders bevorzugter Ausführungsformen enthält die elektrisch leitfähige Klebemasseschicht Nickelpartikel.

Bevorzugt enthält die elektrisch leitfähige Klebemasseschicht 5 bis 65 Gew.-%, besonders bevorzugt 20 bis 62 Gew.-%, an elektrisch leitfähigen Partikeln, insbesondere Metallpartikeln und/oder metallisierten Partikeln, bezogen auf die Gesamtmasse der Klebemasse.

Die elektrisch leitfähigen Partikel sollten bevorzugt nicht oder nicht deutlich größer sein als die jeweilige Dicke der elektrisch leitfähigen Klebemasseschicht in z-Richtung, gemessen mit dem Lichtmikroskop.

Bevorzugt weisen die elektrisch leitfähigen Partikel eine durchschnittliche Partikelgröße von 1 bis 10 $\mu$m, besonders bevorzugt von 1 bis 6 $\mu$m, wiederum bevorzugt von 3 bis 5 $\mu$m, wie insbesondere 4 $\mu$m, auf.

Die elektrisch leitfähige Klebemasseschicht ist insbesondere wenigstens in z-Richtung elektrisch leitfähig.

Sie kann aber auch in der xy-Ebene elektrisch leitfähig sein. Wenn die elektrisch leitfähige Klebemasseschicht lediglich in z-Richtung, nicht aber notwendigerweise in xy-Richtung elektrisch leitfähig ausgestaltet ist, ist gemäß bevorzugter Ausführungsformen, in denen ein Metall, insbesondere Metallpartikel, zugegeben werden, um die elektrische Leitfähigkeit zu erzielen, eine geringere Menge dieser Materialien notwendig. Hierdurch ist die Klebemasse hinsichtlich erforderlicher Leitfähigkeit, Verklebungsfestigkeit, Fließverhalten und der Kosten optimiert.

Eine Schicht gilt im Rahmen der vorliegenden Erfindung insbesondere dann als "elektrisch leitfähig", wenn der Widerstand kleiner als 1 Ohm ist, gemessen in der jeweiligen Richtung, hier insbesondere in z-Richtung, nach dem Standard MIL-DTL-83528C.

Unabhängig davon, ob die Klebemasseschichten C bzw. C und/oder C' elektrisch leitfähig ausgestaltet sind gelten folgende Ausführungen.

Die Klebemasseschichten C bzw. C und/oder C' sind gemäß bevorzugter Ausführungsformen der Erfindung wie die Klebemasseschicht D reaktiv aushärtbare Klebemassen, insbesondere mittels Licht aushärtbare Klebemassen.

Gemäß bevorzugter Ausführungsformen der Erfindung wird in den Klebemasseschichten C bzw. C und/oder C' das gleiche Polymer und die gleichen reaktiven Monomere oder Oligomere nebst entsprechendem Initiatorsystem verwendet, wie in der Klebemasseschicht D. Hierdurch können insbesondere ähnliche Substrate, hier als A und B bezeichnet, miteinander verklebt sein.

Gemäß weiterer bevorzugter Ausführungsformen der Erfindung wird in den Klebemasseschichten C bzw. C und/oder C' eine von der Klebemasse der Klebemasseschicht D verschiedene Klebemasse verwendet.

Hierdurch können die Eigenschaften der leitfähigen Schicht besonders gut an das oder die Substrate angepasst werden, welches über die Klebemasseschicht C bzw. C und/oder C' verklebt ist. Dadurch, dass die Klebemasseschicht C bzw. C und/oder C' bevorzugt keinen Elektrolyten, wie eine ionische Flüssigkeit enthält bzw. enthalten muss, müssen die Bestandteile hierauf nicht abgestimmt werden.

Bevorzugt ist die Klebemasse der Klebemasseschicht D haftklebrig und damit bevorzugt eine Haftklebemasse und die Klebemasseschicht D damit bevorzugt eine Haftklebemasseschicht D.

Hierdurch wird die Verarbeitbarkeit und die Applikation des Klebebandes erleichtert, insbesondere in den Ausführungsformen, bei denen die Klebemasseschicht D als Transferklebeband verwendet wird.

Die Haftklebrigkeit erlaubt vor der Aushärtung eine zuverlässige und sichere Applikation der reaktiven Haftklebebänder am Substrat.

Die Klebemasse der Klebemasseschichten C bzw. C und/oder C' ist gemäß bevorzugter Ausführungsformen ebenfalls eine Haftklebemasse.

Unter einer Haftklebemasse wird vorliegend erfindungsgemäß, wie allgemein üblich, ein Stoff verstanden, der - insbesondere bei Raumtemperatur - dauerhaft klebrig sowie klebfähig ist. Charakteristisch für eine Haftklebemasse ist, dass sie durch Druck auf ein Substrat aufgebracht werden kann und dort haften bleibt, wobei der aufzuwendende Druck und die Einwirkdauer dieses Drucks nicht näher definiert werden. In manchen Fällen, abhängig von der genauen Art der Haftklebemasse, der Temperatur und der Luftfeuchtigkeit sowie dem Substrat, reicht die Einwirkung eines kurzfristigen, minimalen Drucks, der über eine leichte Berührung für einen kurzen Moment nicht hinausgeht, um den Haftungseffekt zu erzielen, in anderen Fällen kann auch eine längerfristige Einwirkdauer eines hohen Drucks notwendig sein.

Haftklebemassen haben besondere, charakteristische viskoelastische Eigenschaften, die zu der dauerhaften Klebrigkeit und Klebfähigkeit führen. Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad der Haftklebemasse als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Auffließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander können die mittels Dynamisch Mechanischer Analyse (DMA, gemäß DIN EN ISO 6721) ermittelbaren Größen Speichermodul (G') und Verlustmodul (G") herangezogen werden. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel $\delta$ bezeichnet.

Der Speichermodul G' ist wie folgt definiert:

$$G' = (\tau/\gamma) \cdot \cos(\delta) \quad (\tau = \text{Schubspannung}, \gamma = \text{Deformation}, \delta = \text{Phasenwinkel} =$$

Phasenverschiebung zwischen Schubspannungs- und Deformationsvektor).

Die Definition des Verlustmoduls G" lautet:

$$G'' = (\tau/\gamma) \cdot \sin(\delta) \quad (\tau = \text{Schubspannung}, \gamma = \text{Deformation}, \delta = \text{Phasenwinkel} =$$

Phasenverschiebung zwischen Schubspannungs- und Deformationsvektor).

Ein Stoff gilt im Allgemeinen als haftklebrig und wird im Sinne der Erfindung als haftklebrig definiert, wenn bei Raumtemperatur, hier definitionsgemäß bei 23°C, im Deformationsfrequenzbereich von $10°$ bis $10^1$ rad/sec G' zumindest zum Teil im Bereich von $10^3$ bis $10^7$ Pa liegt und wenn G" ebenfalls zumindest zum Teil in diesem Bereich liegt. "Zum Teil" heißt, dass zumindest ein Abschnitt der G'-Kurve innerhalb des Fensters liegt, das durch den Deformationsfrequenzbereich von einschließlich $10°$ bis einschließlich $10^1$ rad/sec (Abszisse) sowie den Bereich der G'-Werte von einschließlich $10^3$ bis einschließlich $10^7$ Pa (Ordinate) aufgespannt wird. Für G" gilt dies entsprechend.

Bevorzugt weist die Haftklebemasse im Deformationsfrequenzbereich von $10°$ bis $10^1$ rad/sec bei 23 °C einen Speichermodul G' und einen Verlustmoduls G" im Bereich von $10^3$ bis $10^7$ Pa, bestimmt gemäß DIN EN ISO 6721, auf.

Zur Erzielung der viskoelastischen Eigenschaften werden die Monomere, auf denen die der Haftklebemasse zugrundeliegenden Polymere basieren, sowie die gegebenenfalls vorhandenen weiteren Komponenten der Haftklebemasse insbesondere derart gewählt, dass die Haftklebemasse eine Glasübergangstemperatur (nach DIN 53765) unterhalb der Anwendungstemperatur (also üblicherweise unterhalb der Raumtemperatur (23 °C)) aufweist. Durch geeignete kohäsionssteigernde Maßnahmen, wie beispielsweise Vernetzungsreaktionen (Ausbildung brückenbildender Verknüpfungen zwischen den Makromolekülen), kann der Temperaturbereich, in dem eine Polymermasse haftklebrige Eigenschaften aufweist, vergrößert und/oder verschoben werden. Der Anwendungsbereich der Haftklebemassen kann somit durch eine Einstellung zwischen Fließfähigkeit und Kohäsion der Masse optimiert werden.

Insbesondere weist eine Haftklebemasse eine Glasübergangstemperatur von ≤ 23 °C, bestimmt gemäß DIN 53765, auf.

Zur Vereinfachung definieren die Erfinder, dass ein reaktives Haftklebeband im Sinne der vorliegenden Erfindung bevorzugt eine Klebkraft im unausgehärteten Zustand von wenigstens 1 N/cm besitzt und es nahezu rückstandsfrei entfernt wird (d.h. adhäsives Versagen im Test). Die Klebkraft wird hierbei auf Stahl analog ISO 29862:2007 (Methode 3) bei 23 °C und 50 % relativer Luftfeuchte bei einer Abzugsgeschwindigkeit von 300 mm/min und einem Abzugswinkel von 180° bestimmt. Als Verstärkungsfolie wird eine geätzte PET-Folie mit einer Dicke von 36 μm verwendet, wie sie von der Firma Coveme (Italien) erhältlich ist. Die Verklebung eines 2 cm breiten Messstreifens wird dabei mittels einer Anrollmaschine mit 4 kg bei einer Temperatur von 23 °C vorgenommen. Das Klebeband wird sofort nach der Applikation abgezogen. Der Messwert (in N/cm) ergibt sich als Mittelwert aus drei Einzelmessungen. Kohäsives Versagen in diesem Test zeigen bei Raumtemperatur klebrige Klebstoffe oder Klebebänder, deren Kohäsion nicht ausreichend für ein rückstandfreies Entfernen ist. Solche Klebstoffe oder Klebebänder sind im Sinne der Erfindung keine Haftklebstoffe.

Ein weiterer Gegenstand der vorliegenden Erfindung ist die Herstellung des erfindungsgemäßen Klebebandes.

Die Klebemasse der Klebemasseschicht D und je nach Ausführungsform weitere Klebemassen werden mittels bekannter Verfahren hergestellt und in Schichtform gebracht, insbesondere durch Ausstreichen.

Ferner können ggf. einer oder mehrere Trocknungsschritte erfolgen.

Die Herstellung des erfindungsgemäßen reaktiven Klebebandes erfolgt insbesondere bei Anwesenheit eines Photoredox-Katalysators unter Ausschluss von UV-Licht oder sichtbarem Licht der Wellenlänge, durch die das jeweilige Initiatorsystem, bzw. der jeweilige Photoredox-Katalysator, angeregt wird, insbesondere Violett- und Blaulicht. In der Regel sind dies Wellenlängen von kleiner 500 nm. Der Ausschluss kann in der Regel mit handelsüblichen Gelblichtleuchten sowie durch Abdeckung normaler Lichtquellen, die UV-Anteile und/ oder Violett- und Blaulichtanteile in ihrem Wellenlängenspektrum haben, mit handelsüblichen UV-Schutz- Gelblichtfolien erreicht werden.

Die Klebemasseschicht D wird insbesondere durch die nachfolgend beschriebenen Verfahrensschritte hergestellt:

In einem ersten Schritt werden die Inhaltsstoffe (Bestandteile) in einem oder mehreren organischen Lösungsmittel(n) und/oder Wasser gelöst bzw. fein verteilt. Geeignete Lösemittel sind im Stand der Technik bekannt, wobei bevorzugt Lösemittel eingesetzt werden, in denen mindestens einer der Inhaltsstoffe eine gute Löslichkeit aufweist. Besonders bevorzugt sind Aceton und Methylethylketon (MEK).

Wie hierin verwendet, umfasst der Begriff Inhaltsstoff wenigstens a) mindestens ein Polymer, b) mindestens ein radikalisch polymerisierbares Monomer oder Oligomer, c) mindestens einen Initiator, d) mindestens einen Redox-Katalysator, e) mindestens ein Elektrolyt, und ggf. weitere Bestandteile, wie rheologie-modifizierende Füllstoffe, wie jeweils oben definiert.

Anschließend werden die aufgelösten oder fein verteilten Inhaltsstoffe in einem zweiten Schritt mit üblichen Rührgeräten gemischt. Gegebenenfalls werden die Inhaltsstoffe gleichzeitig aufgelöst, feinverteilt und gemischt.

Es ist auch denkbar, dass zunächst die Basismasse hergestellt wird und dieser anschließend e) wenigstens ein Elektrolyt zugegeben wird.

In jedem Fall wird in einem dritten Schritt ein Film, eine Folie, eine Schicht, ein Träger, ein Klebstofffilm, ein Haftklebstofffilm, bevorzugt ein Trennliner oder ein Trennpapier mit der Mischung der aufgelösten, fein verteilten Inhaltsstoffe beschichtet. Die Beschichtung erfolgt nach den üblichen Techniken, die im Stand der Technik bekannt sind.

Nach der Beschichtung wird das Lösemittel in einem vierten Schritt durch Abdampfen entfernt. Dies erfolgt abhängig von den verwendeten Lösemitteln bevorzugt im Temperaturbereich von 60 °C bis 80 °C.

Zur Lagerung wird die entstandene Schicht bzw. das erfindungsgemäße, reaktive Klebeband mit einem Trennliner oder -papier abgedeckt.

Das Laminieren mehrerer Schichten aufeinander erfolgt auf dem Fachmann bekannte Weise, wobei die Schichten so aufeinandergelegt werden, dass insbesondere ein Schichtverbund D-C oder DTC, wobei T zwischen D und C angeordnet ist, oder C'-T'-D-T-C als doppelseitiges Klebeband erhalten wird.

Das Bereitstellen der Trägerschichten T bzw. T' kann wie oben bereits ausgeführt auf verschiedene Weise erfolgen.

So ist es denkbar, dass a) eine Metallfolie, insbesondere eine Aluminiumfolie, und/oder b) ein elektrisch leitfähiges Netz und/oder d) wenigstens ein Gitter aus Metall und/oder e) eine mit Metall bedampfte PET-Folie zwischen den jeweiligen Klebemasseschichten platziert wird.

Ferner können c) Metallpartikel direkt auf die Oberfläche der Klebemasseschicht D oder C oder C' aufgedampft werden.

Ein weiterer Gegenstand der vorliegenden Erfindung ist die Herstellung eines verklebten Verbundes unter Verwendung des erfindungsgemäßen Klebebandes.

Das erfindungsgemäße Verfahren zur Herstellung eines verklebten Verbundes und damit zur Verklebung zweier Substrate, bevorzugt bei Raumtemperatur, unter Verwendung des erfindungsgemäßen reaktiven Klebebandes umfasst die folgenden Schritte

A) Aufbringen des reaktiven Klebebands auf ein erstes Substrat

B) Aktivierung des reaktiven Klebebands durch Bestrahlung mit UV-Licht oder Blaulicht, wobei Blaulicht insbesondere und beispielsweise eine Wellenlänge von 460 nm aufweist, bevorzugt durch Bestrahlung von einer UV-LED Lampe.

C) Fügen eines zweiten Substrates auf das reaktive Klebeband.

Bei dem erfindungsgemäßen Klebeband kann es sich um sämtliche beschriebenen Ausführungsformen handeln. In jedem Fall umfasst das erfindungsgemäße Klebeband wenigstens eine reaktiv aushärtbare Klebemasseschicht D, welche bei dem Verfahren zur Herstellung eines verklebten Verbundes gemäß Schritt B) aktiviert wird.

Die Aktivierung gemäß Schritt B) kann dabei zeitlich vor dem Schritt A) erfolgen oder im Anschluss daran.

Bevorzugt erfolgt die Aktivierung gemäß Schritt B) zeitlich vor dem Schritt C), insbesondere wenn eine Aktivierung durch das erste und zweite Substrat hindurch nicht möglich ist.

Bevorzugt wird in diesem Verfahren, insbesondere bei der Durchführung im industriellen Maßstab, mit einer Wellenlänge von 365 nm oder 385 nm, bevorzugter mit 365 nm, bestrahlt.

Ebenso bevorzugt kann die Bestrahlung auch mit einer 460 nm LED-Strahlungsquelle erfolgen. Die Ergebnisse, die mittels Bestrahlung mit 460 nm-Licht erzielt werden, sind repräsentativ für die Bestrahlung mit Licht einer Wellenlänge von 365 nm oder 385 nm.

In den Ausführungsformen, in denen weitere Schichten C oder C' reaktiv aushärtbar ausgestaltet sind, werden diese ebenso entsprechend aktiviert, bevorzugt gemäß Schritt B) ebenfalls durch Bestrahlung mit UV-Licht oder Blaulicht.

Der Fachmann wird die zeitliche Reihenfolge der Schritte auch in diesem Fall auf die jeweiligen Substrate und Beschaffenheit und Konstruktion des jeweiligen Klebebandes anpassen.

Erfindungsgemäß ist auch ein Verfahren zur Herstellung eines verklebten Verbundes und damit zur Verklebung zweier Substrate, bevorzugt bei Raumtemperatur, unter Verwendung des erfindungsgemäßen reaktiven Klebeband-Systems umfasst die folgenden Schritte:

X1) Bereitstellen eines ersten erfindungsgemäßen Klebebandes, welches in der reaktiv aushärtbaren Klebemasseschicht D wenigstens einen Initiator enthält; und

X2) Bereitstellen eines zweiten erfindungsgemäßen Klebebandes, welches in der reaktiv aushärtbaren Klebemasseschicht D wenigstens einen Redox-Katalysator enthält; und

X3) Bereitstellen eines ersten Substrates; und

X4) Bereitstellen eines zweiten Substrates; und

X5) Aufbringen des ersten erfindungsgemäßen Klebebandes auf das erste Substrat; und

X6) Aufbringen des zweiten erfindungsgemäßen Klebebandes auf das zweite Substrat; und

X7) Inkontaktbringen des ersten erfindungsgemäßen Klebebandes mit dem zweiten erfindungsgemäßen Klebeband.

Die Schritte X1) bis X7) können in beliebiger Reihenfolge durchgeführt werden, sodass das Inkontaktbringen der beiden Klebebänder nach dem Aufbringen auf das jeweilige Substrat oder vorher erfolgen kann.

Der Fachmann wird die zeitliche Reihenfolge der Schritte auch in diesem Fall auf die jeweiligen Substrate und Beschaffenheit und Konstruktion der jeweiligen Klebebänder anpassen.

Das erfindungsgemäße Klebeband stellt insbesondere ein doppelseitiges Klebeband dar, bei dem je nach Ausführungsform zwei Flächen der Klebemasseschicht D (Transferklebeband) oder eine Fläche der ersten Klebemasseschicht D und eine Fläche der zweiten Klebemasseschicht C (Zweischichtverbund D-C oder Dreischichtverbund D-T-C) oder jeweils eine Fläche der Klebemasseschichten C und C' (Fünfschichtverbund C-T-D-T'-C') jeweils zum Verkleben von Substraten verfügbar sind.

Vorteilhaft können die äußeren, frei liegenden Flächen der Klebemasseschichten des erfindungsgemäßen Klebebandes mit antiadhäsiven Materialien ausgerüstet sein wie mit einem Trennpapier oder einer Trennfolie, auch Liner genannt. Bei einem Liner kann es sich auch um mindestens einseitig, vorzugsweise beidseitig, antiadhäsiv beschichtetes Material handeln, wie beispielsweise beidseitig silikonisiertes Material. Ein Liner, bzw. allgemeiner formuliert, ein temporärer Träger, ist nicht Bestandteil eines Klebebands, sondern nur ein Hilfsmittel zu dessen Herstellung, Lagerung und/oder für die Weiterverarbeitung durch Stanzen. Darüber hinaus ist ein Liner im Gegensatz zu einem permanenten Träger nicht fest mit einer Klebstoffschicht verbunden, sondern fungiert vielmehr als temporärer Träger, d.h. als Träger, der von der Klebstoffschicht abziehbar ist. "Permanente Träger" werden in der vorliegenden Anmeldung synonym auch einfach "Träger" genannt.

Die Dicke der einzelnen Klebemasseschicht(en) (in z-Richtung) beträgt bevorzugt von 10 bis 300 $\mu$m, besonders bevorzugt 15 bis 150 $\mu$m, ganz besonders bevorzugt von 20 bis 100 $\mu$m, ganz besonders bevorzugt von 25 bis 70 $\mu$m.

In den Ausführungsformen des Zweischichtverbundes D-C, Dreischichtverbundes D-T-C sowie des Fünfschichtverbundes C-T-D-T'-C' weisen die Klebemasseschichten D und C bzw. D und C sowie D und C' gemäß bevorzugter Ausführungsformen unterschiedliche Schichtdicken auf, wobei die Dicke der Klebemasseschicht D beispielsweise geringer ist als die der Klebemasseschichten C bzw. C und C'.

Gemäß weiterer bevorzugter Ausführungsformen weisen die Schichten D und C bzw. D, C und C' die gleiche Schichtdicke auf.

Wenn die Schichtdicke der Schicht D zu hoch ist, wird diese aufgrund der enthaltenen Elektrolyten ggf. unwirtschaftlich teuer.

Nachfolgend werden bevorzugte Ausführungsformen der Erfindung unter Bezugnahme auf die beiliegenden Figuren näher erläutert und beschrieben. Dabei zeigen:

Fig. 1 eine vereinfachte schematische Querschnittsdarstellung durch ein erfindungsgemäßes doppelseitiges Klebeband in einer bevorzugten Ausführungsform; und

Fig. 2 eine vereinfachte schematische Querschnittsdarstellung durch ein erfindungsgemäßes doppelseitiges Klebeband in einer bevorzugten Ausführungsform; und

Fig. 3 eine vereinfachte schematische Querschnittsdarstellung durch ein erfindungsgemäßes doppelseitiges Klebeband in einer bevorzugten Ausführungsform; und

Fig. 4 eine vereinfachte schematische Querschnittsdarstellung durch einen erfindungsgemäßen verklebten Verbund einer bevorzugten Ausführungsform; und

Fig. 5 eine vereinfachte schematische Querschnittsdarstellung durch einen erfindungsgemäßen verklebten Verbund, an den eine Spannung angelegt ist, in einer bevorzugten Ausführungsform; und

Fig. 6 eine vereinfachte schematische Querschnittsdarstellung durch einen erfindungsgemäßen verklebten Verbund, nachdem eine Spannung angelegt wurde und hierdurch eine adhäsive Spaltung erfolgt ist; und

Fig. 7 eine vereinfachte schematische Querschnittsdarstellung durch einen erfindungsgemäßen verklebten Verbund einer bevorzugten Ausführungsform; und

Fig. 8 eine vereinfachte schematische Querschnittsdarstellung durch einen erfindungsgemäßen verklebten Verbund einer bevorzugten Ausführungsform.

Fig. 9 eine vereinfachte schematische Querschnittsdarstellung durch ein erfindungsgemäßes doppelseitiges Klebeband in einer bevorzugten Ausführungsform; und

Fig. 10 eine vereinfachte schematische Querschnittsdarstellung durch einen erfindungsgemäßen verklebten Verbund, an den eine Spannung angelegt ist, in einer bevorzugten Ausführungsform; und

Fig. 11 eine vereinfachte schematische Querschnittsdarstellung durch einen erfindungsgemäßen verklebten Verbund, nachdem eine Spannung angelegt wurde und hierdurch eine adhäsive Spaltung erfolgt ist.

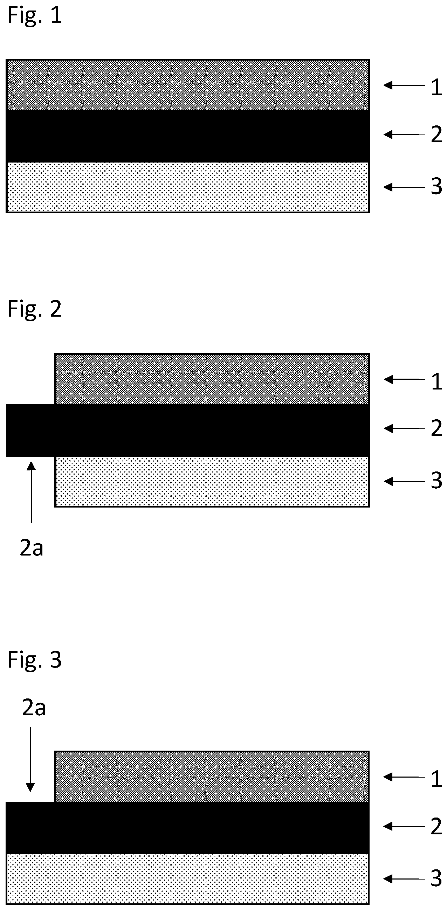

Wie in Fig. 1 erkennbar ist die Klebemasseschicht D 1 über eine ihrer Flächen mit der Trägerschicht T 2 verbunden. Auf der der Schicht D gegenüberliegenden Fläche der Trägerschicht T ist die zweite Klebemasseschicht C 3 angeordnet.

Wie in Fig. 1 ebenfalls erkennbar stellt der Schichtverbund ein doppelseitiges Klebeband dar, bei dem eine Fläche der Klebemasseschicht D und eine Fläche der zweiten Klebemasseschicht C jeweils zum Verkleben verfügbar sind.

In Fig. 2 ist eine bevorzugte Ausführungsform der Erfindung dargestellt. Hierbei überragt die elektrisch leitfähige Trägerschicht T 2 die Klebemasseschicht D 1 und die zweite Klebemasseschicht C 3 in wenigstens einer Erstreckungsrichtung der Schichtebene seitlich, sodass die elektrisch leitfähige Trägerschicht T 2 einen Überstand mit wenigstens einer freien Fläche 2 a aufweist.

In Fig. 3 ist eine weitere bevorzugte Ausführungsform der Erfindung dargestellt. Hierbei überragt die elektrisch leitfähige Trägerschicht T 2 die Klebemasseschicht D 1 in wenigstens einer Erstreckungsrichtung der Schichtebene seitlich, sodass die elektrisch leitfähige Trägerschicht T 2 einen Überstand mit einer freien Fläche 2 a aufweist. In Fig 3 ist die Klebemasseschicht C 3 so ausgebildet, dass sie ebenfalls einen Überstand relativ zur Schicht D 1 aufweist. Bei der Trägerschicht T 2 handelt es sich insbesondere um eine einseitig mit Aluminium beschichtete PET-Folie, wobei die aluminisierte Seite an die Schicht D 1 gebunden ist.

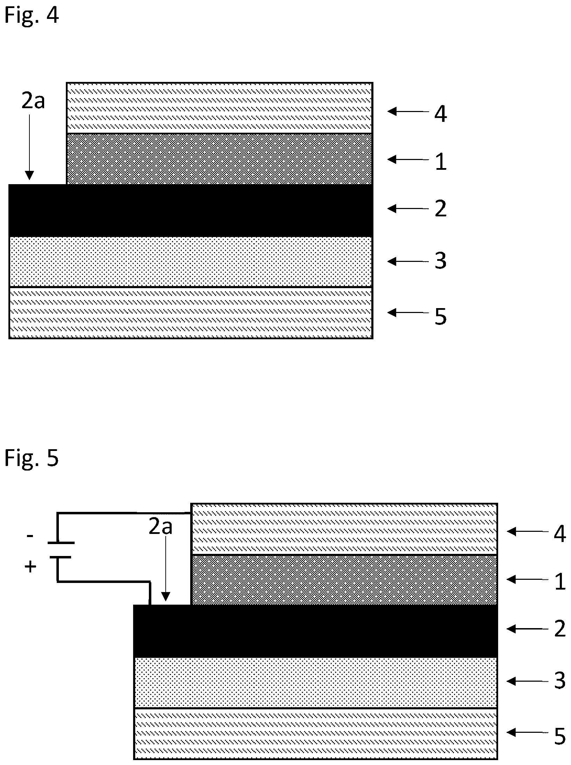

In Fig. 4 ist eine schematische Darstellung des erfindungsgemäßen verklebten Verbundes in einer bevorzugten Ausführungsform abgebildet. Wie anhand von Fig. 4 erkennbar, ist das Klebeband über die Klebemasseschicht D 1 auf einer Fläche des ersten Substrates A 4 angeordnet, wobei das erste Substrat elektrisch leitfähig ist.

Ferner ist das Klebeband über die zweite Klebemasseschicht C 3 auf einer Fläche eines zweiten Substrates B 5 angeordnet.

In Fig. 4 ist ebenfalls beispielhaft dargestellt, dass die elektrisch leitfähige Trägerschicht T 2 die Klebemasseschicht D 1 in wenigstens einer Erstreckungsrichtung der Schichtebene seitlich überragt, sodass die elektrisch leitfähige Trägerschicht T einen Überstand mit einer freien Fläche 2 a aufweist.

Über diese freie Fläche 2a kann nun eine Spannung angelegt werden, wie in der schematischen Darstellung gemäß Fig. 5 gezeigt.

Durch das Anlegen der Spannung erfolgt eine Wanderung des Elektrolyten, insbesondere eine Trennung der Anionen und Kationen einer ionischen Flüssigkeit, in der Klebemasseschicht D 1.

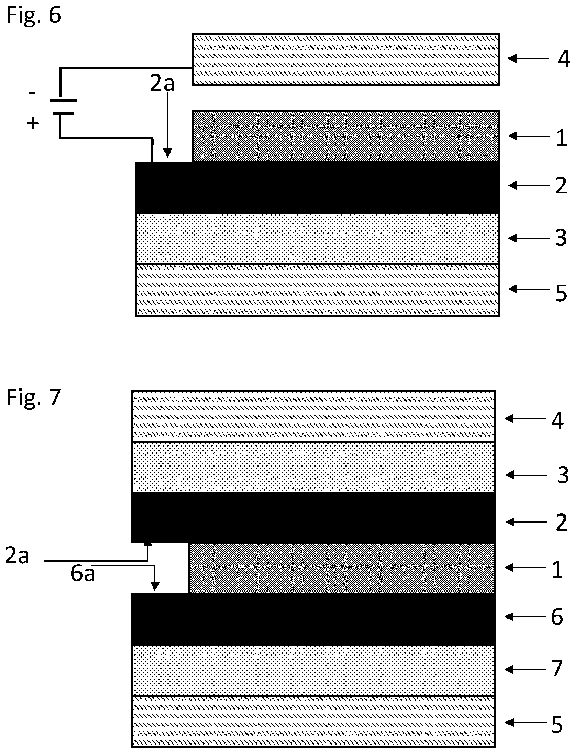

Hierdurch wird die Adhäsion der Klebemasseschicht D 1 an das Substrat A 4 stark herabgesetzt und es erfolgt ein Lösen dieser Schichten voneinander, wie an der schematischen Darstellung gemäß Fig. 6 erkennbar.

In Fig. 7 ist eine weitere schematische Darstellung des erfindungsgemäßen verklebten Verbundes in einer bevorzugten Ausführungsform abgebildet. Wie anhand von Fig. 7 erkennbar, ist das Klebeband über die Klebemasseschicht C 3 auf einer Fläche des ersten Substrates A 4 angeordnet.

Ferner ist das Klebeband über die dritte Klebemasseschicht C' 7 auf einer Fläche eines zweiten Substrates B 5 angeordnet.

Zwischen den Schichten C 3 und C' 7 befinden sich die elektrisch ablösbare Klebemasseschicht D 1 sowie zwei elektrisch leitfähige Trägerschichten T 2 und T' 6, wobei die Schicht D 1 zwischen den Trägerschichten angeordnet ist.

In Fig. 7 ist ebenfalls beispielhaft dargestellt, dass die elektrisch leitfähige Trägerschicht T 2 sowie die elektrisch leitfähige Trägerschicht T' 6 die Klebemasseschicht D 1 jeweils in wenigstens einer Erstreckungsrichtung der Schichtebene seitlich überragen, sodass die elektrisch leitfähige Trägerschicht T einen Überstand mit einer freien Fläche 2a und die elektrisch leitfähige Trägerschicht T' einen Überstand mit einer freien Fläche 6a aufweist.

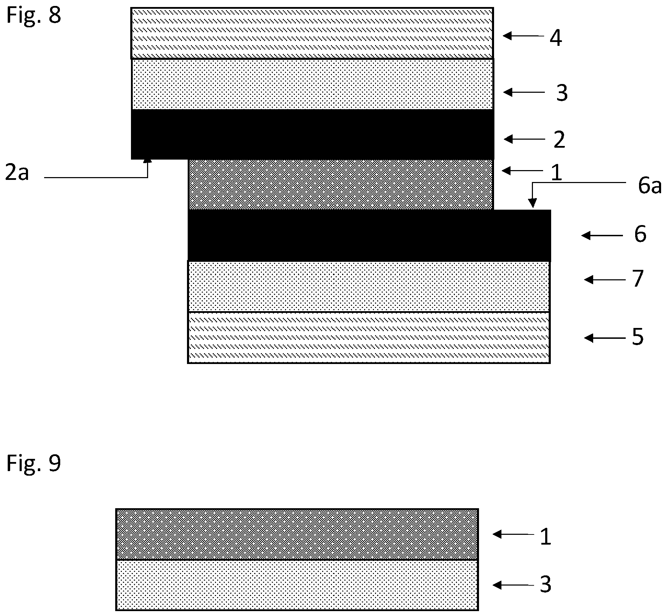

In Fig. 8 ist eine weitere schematische Darstellung des erfindungsgemäßen verklebten Verbundes in einer bevorzugten Ausführungsform abgebildet, welche der Darstellung gemäß Fig. 7 ähnlich ist. Im Unterschied zu Fig. 7 zeigen die Überstände der elektrisch leitfähigen Trägerschicht T 2 und der elektrisch leitfähigen Trägerschicht T' 6 jedoch in unterschiedliche Richtungen, sodass die resultierenden freien Flächen dieser Schichten 2a bzw. 6a räumlich getrennt sind.

Über diese freien Flächen 2a und 6a kann nun eine Spannung angelegt werden, analog zu Figur 5. Im Unterschied zur Ausführungsform gemäß Figur 5 kann die Spannung an die Flächen 2a und 6a angelegt werden, sodass keines der Substrate A und B elektrisch leitfähig sein muss.

Durch das Anlegen der Spannung erfolgt eine Wanderung des Elektrolyten, insbesondere eine Trennung der Anionen und Kationen einer ionischen Flüssigkeit, in der Klebemasseschicht D 1. Hierdurch wird die Adhäsion der Klebemasseschicht D 1 an die Trägerschichten T 2 und/oder T' 6 stark herabgesetzt und es erfolgt ein Lösen dieser Schichten voneinander. Insbesondere erfolgt ein Ablösen an die Schicht, an welche der Minuspol angelegt wird.

Das Anlegen der Spannung ist im Fall der räumlich getrennten Flächen 2a und 6a gemäß Fig. 8 vereinfacht.

In Fig. 9 ist schematisch der Zweischichtverbund aus der elektrisch ablösbaren und hierzu Elektrolyt-haltigen Klebemasseschicht D 1 und einer zweiten Klebemasseschicht C 3 dargestellt.

Bevorzugt ist diese zweite Klebemasseschicht, insbesondere in dieser Ausführungsform, elektrisch leitfähig.

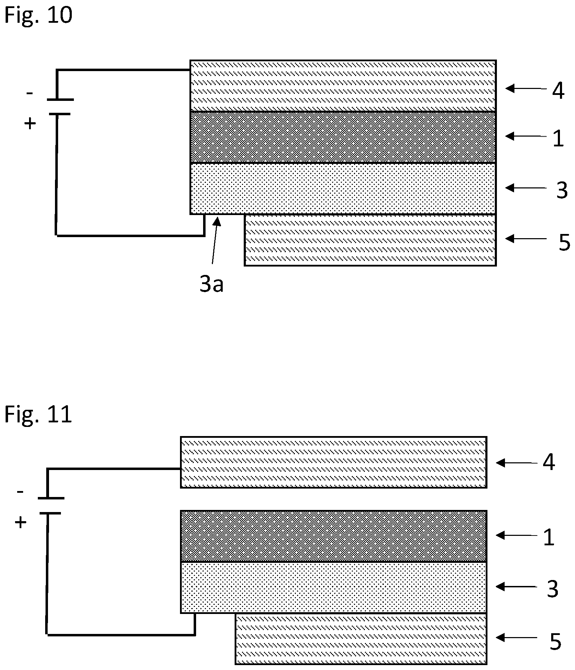

Hierdurch kann an diese eine Spannung angelegt werden, wie in Fig. 10 schematisch dargestellt. Wie in Fig. 10 ebenfalls dargestellt, überragt die leitfähige Schicht C 3 das Substrat 5 dabei seitlich, sodass eine freie Fläche 3a zur Verfügung steht, an diese eine Spannung angelegt werden kann. Das Anlegen der Spannung erfolgt hierbei somit an einer Stelle der Schicht C, die neben dem Substrat 5 angeordnet ist, und nicht seitlich.

Durch das Anlegen einer Spannung wird auch hier die Adhäsion der Klebemasseschicht D 1 an das Substrat A 4 verringert, sodass sich Substrat und Klebemasseschicht voneinander lösen, wie in Fig. 11 dargestellt.

Die Darstellungen in den Fig. 1 bis 11 sind wie ausgeführt schematische Darstellungen. Insbesondere können die Schichtdicken der einzelnen Schichten D, T und C voneinander abweichen. Ferner sind auch die Substrate A und B lediglich schematisch als weitere Schichten dargestellt. Diese können selbstverständlich jegliche andere räumliche Geometrie aufweisen.

Im Folgenden werden einige Beispiele beschrieben, um die Erfindung weiter zu verdeutlichen.

*Prüfmethoden*

Alle Messungen werden, sofern nichts anderes angegeben ist, bei 23 °C und 50 % relativer Luftfeuchtigkeit durchgeführt. Die mechanischen und klebtechnischen Daten wurden wie folgt ermittelt:

*Molekulargewicht $M_n$, $M_w$*

Die Angaben des zahlenmittleren Molekulargewichts $M_n$ bzw. gewichtsmittleren Molekulargewichts $M_w$ in dieser Schrift beziehen sich auf die Bestimmung per Gelpermeationschromatographie (GPC). Die Bestimmung erfolgt an 100 $\mu$l klarfiltrierter Probe (Probenkonzentration 4 g/l). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 $\mu$m, $10^3$ Å, 8,0 mm * 50 mm (Angaben hier und im Folgenden in der Reihenfolge: Typ, Partikelgrösse, Porosität, Innendurchmesser * Länge; 1 Å = $10^{-10}$ m) verwendet. Zur Auftrennung wird eine Kombination der Säulen des Typs PSS-SDV, 5 $\mu$m, $10^3$ Å sowie $10^5$ Å und $10^6$ Å mit jeweils 8,0 mm * 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung erfolgt bei polaren Molekülen gegen PMMA-Standards (Polymethylmethacrylat-Kalibrierung) und sonst gegen PS-Standards (Polystyrol-Kalibrierung).

*Dicke*

Die Dicke einer Klebemasseschicht kann durch Bestimmung der Dicke eines bezüglich seiner Länge und seiner Breite definierten Abschnitts einer solchen auf einen Liner aufgetragenen Klebemassenschicht bestimmt werden, abzüglich der (bekannten oder separat ermittelbaren) Dicke eines Abschnitts gleicher Dimensionen des verwendeten Liners. Die Dicke der Klebemasseschicht lässt sich über handelsübliche Dickenmessgeräte (Taster-Prüfgeräte) mit Genauigkeiten von weniger als 1 $\mu$m Abweichung ermitteln. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

Wie bereits die Dicke einer Klebemasseschicht lässt sich auch die Dicke eines Klebebands (Klebestreifens) bzw. eines Trägers analog über handelsübliche Dickenmessgeräte (Taster-Prüfgeräte) mit Genauigkeiten von weniger als 1 $\mu$m Abweichung ermitteln. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

*Push-Out (SUS-SUS) - initial (Verklebungsfestigkeit)*

Der Push-Out-Test ermöglicht Aussagen über die Verklebungsfestigkeit eines Klebeprodukts in Richtung der Klebschichtnormalen. Bereitgestellt werden ein kreisförmiges erstes Substrat (1) (SUS, VA-1.4301 Stahl (einseitig spiegelpoliert), Dicke 3 mm) mit Durchmesser 21 mm, ein quadratisches zweites Substrat (2) (SUS, VA-1.4301 Stahl (einseitig spiegelpoliert), Dicke 2 mm) mit 40 mm Seitenlänge - mit einer kreisförmigen, zentral angeordneten Öffnung (Bohrung) von 9 mm Durchmesser, sowie die zu untersuchenden Klebebandprobe, die ringförmig mit einem Außendurchmesser von 18 mm und einem Innendurchmesser von 13 mm gestanzt wurde, so dass ein Ring mit einer Stegbreite von 5 mm entstand.

Aus den vorgenannten drei Bauteilen wird ein Prüfkörper hergestellt, indem das Klebeprodukt mit einer freien Oberfläche mittig auf das Substrat (1) verklebt wird. Dann wird die temporäre Schutzfolie (silikonisierter PET-Liner) entfernt und mit mindestens 50 J/cm$^2$ mit einer Blaulicht LED (LED Spot 100 HP IC 460 nm der Hönle AG) bestrahlt. Die Aktivierung kann stattdessen auch mit einer 365 nm UV-LED (Hönle AG) erfolgen.

Dieser Verbund wird mit der nun freiliegenden Seite des Klebeproduktes innerhalb von 2 Minuten auf das Substrat (2) konzentrisch appliziert, also derart, dass die kreisrunde Aussparung des Substrats (2) genau mittig über dem kreisrunden ersten Substrat 1 angeordnet ist (Verklebungsfläche ist somit 151 mm$^2$) und mit einem Druck von mindestens 3 bar für mindestens 30 Sekunden verpresst, wobei der Prüfkörper entsteht.

Nach dem Verpressen werden die Prüfkörper für 72 Stunden bei 23 °C / 50 % relativer Feuchte (r.F.) konditioniert.

Nach der Lagerung wird der Klebeverbund in eine Probenhalterung gespannt, so dass der Verbund waagerecht ausgerichtet ist. Der Prüfkörper wird mit der Scheibe (Substrat (1)) nach unten in die Probenhalterung eingelegt und in einer Vorrichtung (Zwick) die Verklebungsfestigkeit gemessen. Dazu wird ein Stahlstempel mit einem Durchmesser von 7 mm durch die kreisförmige Öffnung in Substrat (2) gefahren und die Kraft bestimmt, die benötigt wird das kreisförmige Substrat (1) vom quadratischen Substrat (2) zu trennen. Als Ausgabewert wird die bestimmte Kraft durch die Verklebungsfläche geteilt und die Kraft in MPa angegeben.

Es werden drei Proben pro Produkt getestet und der Mittelwert als Kennzahl für die Verklebungsfestigkeit angegeben.

Folgende erfindungsgemäße Beispiele für Klebebänder umfassend wenigstens eine Klebemasseschicht D wurden hergestellt, zwischen Substrate verklebt und im Anschluss durch ein Anlegen einer Spannung elektrisch wieder gelöst. Die Klebemassen der Schicht D waren dabei jeweils reaktiv mittels Lichts bei Raumtemperatur aushärtbare, vor der Aktivierung haftklebrige Klebemassen.

Tabelle 1: Eingesetzte Chemikalien

| | |
|---|---|
| 2-Phenoxyethylacrylat (PEA) | CAS Nr. 48145-04-6, Monomer Poly(meth)acrylat, BASF |
| Methylmethacrylat (MMA) | CAS Nr. 80-62-6, Monomer Poly(meth)acrylat, Sigma-Aldrich |
| Vazo® 67 | CAS Nr. 13472-08-7, 2,2'-Azobis(2-methylbutryro-nitril), Polymerisationsinitiator, Akzo Nobel |
| N-Vinylcaprolactam (NVC) | CAS-Nr.: 2235-00-9, Monomer von Poly(N-Vinylcaprolactam), Sigma-Aldrich |
| Di(4-tert-5-butylcyclohexyl)peroxy-dicarbonat | CAS Nr. 15520-11-3, Polymerisationsinitiator, Akzo Nobel |
| Desmomelt 530 | Weitgehend lineares, stark kristallisierendes Polyurethan-Elastomer, Covestro |
| 2-Hydroxy-3-phenoxypropylacrylat (HPPA) | CAS-Nr.: 16969-10-1, radikalisch polymerisierbares Monomer, Sigma-Aldrich |
| MAPU | 2-Methacryloxyethyl Phenyl Urethane, CAS: 51727-47-0, Cymer, Feststoff bei 21 °C |
| HECLA | Hydroxyethylcaprolactone Acrylate, CAS: 110489-05-9, BASF, Siedepunkt > 30°C bei 1 mbar |
| Peroxan® IHP-50 | 50 gewichtsprozentige Lösung von Diisopropylhydroperoxid (CAS-Nr.: 26762-93-6) in Diisopropylbenzol, Radikalinitiator, Pergan GmbH |
| Ru(bpy)$_3$ Cl$_2$ / Tris(2,2'-bipyridyl) ruthenium(II) chlorid | als Hexahdyrat; Tris(2,2'-bipyridyl) ruthenium(II) chlorid Hexahydrat, Ru(bpy)$_3$Cl$_2$ • 6H$_2$O; CAS-Nr.: 50525-27-4, Photoredox-Katalysator, Chemos GmbH |
| Aerosil® R202 | CAS-Nr.: 7631-86-9, hydrophobierte pyrogene Kieselsäure, Evonik AG |
| EMIM-TFSI | 1-Ethyl-3-methylimidazoliumbis(trifluormethylsulfonyl)amid, CAS: 174899-82-2 |
| BMIM-FSI | 1-Ethyl-3-methyl-imidazolium-bis(fluorsulfonyl)imid, CAS: 235789-75-0 |
| Basionics VS 03 | 1-Ethyl-3-methyl imidazolium dicyanamide, CAS: 370865-89-7 |
| Polymer P1 | Polymethacrylat, hergestellt wie beschrieben |

**Transferklebebänder**

**Herstellung Polymer P1**

Ein für radikalische Polymerisationen konventioneller 4 L-Reaktor wurde mit 320 g einer Mischung aus 69 Gew.-% 2-Phenoxyethylacrylat und 31 Gew.-% Methylmethacrylat sowie 273 g Ethylacetat/Isopropanol (96/04) befüllt. Nach 45-minütiger Durchleitung von Stickstoffgas unter Rühren wurde der Reaktor auf 58 °C hochgeheizt und 0,2 g Vazo® 67 (2,2'-Azobis(2-methylbutryronitril)) hinzugegeben. Weitere 480 g der oben beschriebenen Monomermischung und 377 g Ethylacetat wurden 2 Stunden lang kontinuierlich zugegeben. Anschließend wurde das äußere Heizbad auf 65 °C erwärmt und die Reaktion konstant bei dieser Außentemperatur durchgeführt. Nach 1 h und nach 1,5 h Reaktionszeit wurden jeweils 0,3g und 0,3g 2,2'-Azobis(2-methylbutryonitril) hinzugegeben. Zur Reduktion der Restmonomeren wurden nach 6 h und nach 7,5 h jeweils 0,12 g Di(4-tert-5-butylcyclohexyl)peroxydicarbonat hinzugegeben. Es wurde einmal nach 2 h und 4 h mit 160 g Ethyl Acetat verdünnt. Die Reaktion wurde nach 24 h Reaktionszeit abgebrochen und auf Raumtemperatur abgekühlt.

**Herstellung Poly(N-Vinylcaprolactam) (P(NVC))- Lösung**

Ein für radikalische Polymerisationen konventioneller 10 L-Glasreaktor wurde mit 4,0 kg N-Vinylcaprolactam, 3,84 kg Aceton und 0,16 kg Isopropanol befüllt. Unter Durchleitung von Stickstoffgas wurde der Reaktor unter Rühren (70 U/min) auf 65 °C Manteltemperatur geheizt. Bei Erreichen von 58 °C Innentemperatur wurden 2,0 g Vazo® 67 zugegeben. Nach einer Stunde weiterem Rühren bei 65 °C Manteltemperatur wurden weitere 2,0 g Vazo® 67 zugegeben. Nach 6 Stunden weiterem Rühren bei 65 °C Manteltemperatur wurde die Drehzahl des Rührers auf 35 U/min herabgesetzt. Die Reaktionszeit betrug 20 Stunden. Nach dieser Zeit wurde die Lösung auf Raumtemperatur abgekühlt und mit Aceton auf einen Feststoffgehalt von 40,0 Gewichtsprozent verdünnt. Die Molmasse des erhaltenen Poly(N-Vinylcaprolactams) wurde mittels thermischer Feldfluss-Fraktionierung bestimmt, da die Bestimmung mittels GPC nicht möglich war. Ergebnis: $M_n$ = 74.000 g/mol, $M_w$ = 116.500 g/mol. Die Angabe in Tabelle 2 bezieht sich auf das Polymer als Feststoff.

**Herstellung der Reaktivklebemassen**

Wässrige Photoredoxkatalysator-Lösung

Unter Gelblicht wurden 5 g Tris(2,2'-bipyridyl)ruthenium(II)chlorid Hexahydrat und 95 g voll entsalztes Wasser in ein braunes Schraubglas eingewogen. Das Schraubglas wurde verschlossen. Durch 8 Stunden Rollen des Schraubglases auf einer Rollbank wurde das Tris(2,2'-bipyridyl)ruthenium(II)chlorid Hexahydrat vollständig in Lösung gebracht.

Reaktivklebemasse

Die Herstellung der Basismassen der Reaktivklebemassen erfolgte im Labor gemäß den Mengenanteilen in der untenstehenden Tabelle 2. Zu den hergestellten, in Lösungsmittel vorliegenden Polymeren wurden die weiteren Rohstoffe zugegeben und im Anschluss daran wurde die wässrige Photoredoxkatalysator-Lösung mittels Rührens zugegeben. Wurden kommerzielle Polymere eingesetzt, so wurden diese als 40%-ige Lösung in Butanon angesetzt. Die Menge an Butanon ist in Tabelle 2 jedoch nicht mitangegeben.

Tabelle 2

| Substanzen | K1 [Gew.-%] | K2 [Gew.-%] |
|---|---|---|
| P1 | 55 | - |
| Desmomelt530 | - | 40 |
| P(NVC) | - | 15 |
| HECLA | 23,2 | - |
| MAPU | 15,5 | - |
| HPPA | - | 39 |
| Aerosil® R202 | 3,8 | 3,8 |
| Peroxan® IHP-50 | 2,47 | 2,17 |
| Ru(bpy)₃Cl₂ | 0,03 | 0,03 |

Die Klebmassen K1 und K2 wurden mit Butanon auf einen Feststoffgehalt von 34% eingestellt.

**Herstellung der reaktiven Haftklebebänder**

Zur Herstellung der reaktiven Klebemasseschichten, also der trägerlosen Transferhaftklebebänder, wurden die verschiedenen reaktiven Klebemassen aus einer Lösung auf einen konventionellen Liner (silikonisierte Polyesterfolie) mittels eines Laborstreichgeräts aufgebracht und getrocknet. Die Größe der Klebemassenschicht betrug ungefähr 21 cm x 30 cm und die Klebmassenschichtdicke nach dem Trocknen betrug $100 \pm 5\ \mu$m. Die Trocknung erfolgte jeweils zunächst bei RT für 15 Minuten und 15 Minuten bei 120 °C in einem Labortrockenschrank. Die getrockneten Klebmasseschichten wurden jeweils unverzüglich nach dem Trocknen mit einem zweiten Liner (silikonisierte Polyesterfolie mit geringerer Trennkraft) auf der offenen Seite laminiert.

Es wurden entsprechende Klebebänder aus den Klebemassen K1 und K2 hergestellt.

**Elektrisch lösbare reaktive Klebebänder ED1-ED7**

Zu der Klebemasselösung K1 wurden 7 % BMIM-TFSI eingerührt und wie oben beschrieben Haftklebebänder hergestellt, woraus sich das Beispiel ED1 ergibt.

K2 wurde mit folgenden ionischen Flüssigkeiten (i.F.) in den in Tabelle 3 aufgelisteten Mengenanteilen (in %) abgemischt und ebenfalls entsprechende Haftklebebänder hergestellt, woraus sich die Beispiele ED2 bis ED7 ergeben.

Sämtliche Mengenanteilsangaben der ionischen Flüssigkeiten beziehen sich jeweils auf 100 Gewichtsteile der entsprechenden Klebemasse K1 oder K2 ohne Lösungsmittel, also auf 100 Gew.-% Trockenmasse, sodass im Beispiel ED2 zu 100 Gewichtsteilen der trockenen Basismasse K2 3 Gewichtsteile der ionischen Flüssigkeit EMIM-FSI hinzukommen.

Tabelle 3

| i.F. | Einheit | ED2 | ED3 | ED4 | ED5 | ED6 | ED7 |
|---|---|---|---|---|---|---|---|
| EMIM-FSI | Gewichtsteile | 3 | 7 | 9 | 15 | 21 | |
| Basionics VS 03 | Gewichtsteile | | | | | | 3 |

Die Verklebungsfestigkeiten der Vergleichsklebebänder aus K1 und K2 sowie der erfindungsgemäßen elektrisch lösbaren Klebebänder ED1 bis ED7 wurden gemäß der oben angegebenen Methode bestimmt, wobei während der Probenpräparation wie bei der Methodenbeschreibung zur Verklebungsfestigkeit angegeben mittels Bestrahlung aktiviert wird.

Die Ergebnisse sind ebenfalls in Tabelle 4 zusammengefasst.

Ferner wurden weitere Proben der genannten Klebebänder hergestellt und zunächst für 3 Minuten eine Spannung von 12 V angelegt und erst dann die Verklebungsfestigkeiten bestimmt. Die Ergebnisse sind ebenfalls in Tabelle 4 zusammengefasst.

Tabelle 4

| | K1 | K2 | ED1 | ED2 | ED3 | ED4 | ED5 | ED6 | ED7 |
|---|---|---|---|---|---|---|---|---|---|
| Verklebungsfestigkeit [MPa] vor Anlegen der Spannung | 4,5 | 7,8 | 4,8 | 8,5 | 6,0 | 9,2 | 7,7 | 4,3 | 2,0 |
| Verklebungsfestigkeit [MPa] nach Anlegen der Spannung: 3 Min. 12 V | 4,6 | 7,4 | 0,2 | 0,9 | 0,6 | 0,7 | 0,1 | 0,2 | 0,1 |

Wie die Versuche zur Verklebungsfestigkeit und Wiederablösbarkeit bei den erfindungsgemäßen Beispielen ED1 bis ED7 zeigen, wird bei Vorhandensein einer ionischen Flüssigkeit in der Klebemasseschicht D durch das Anlegen einer Spannung die Verklebungsfestigkeit deutlich reduziert. Somit lassen sich die verklebten Substrate ohne großen Kraftaufwand wieder voneinander lösen. Ferner gelingt das Ablösen rückstandsfrei.

Bezugszeichenliste

1 Klebemasseschicht D
2 elektrisch leitfähige Trägerschicht T
2a freie Fläche der elektrisch leitfähigen Trägerschicht T
3 zweite Klebemasseschicht C
3a freie Fläche der Klebemasseschicht C

4        erstes Substrat A
5        zweites Substrat B
6        zweite elektrisch leitfähige Trägerschicht T'
6a       freie Fläche der elektrisch leitfähigen Trägerschicht T'
7        dritte Klebemasseschicht C'

**Patentansprüche**

1.  Reaktives Klebeband, umfassend wenigstens eine reaktiv aushärtbare Klebemasseschicht D enthaltend eine Basismasse, wobei die Basismasse

    a) ein oder mehrere Polymere, und
    b) ein oder mehrere radikalisch polymerisierbare Monomere und/oder Oligomere, und
    c) wenigstens einen Initiator und/oder
    d) wenigstens einen Redox-Katalysator,
    enthält, und wobei die reaktiv aushärtbare Klebemasseschicht D zusätzlich
    e) wenigstens ein Elektrolyt enthält.

2.  Reaktives Klebeband nach Anspruch 1, **dadurch gekennzeichnet, dass** der Elektrolyt der Klebemasseschicht D ausgewählt ist aus der Gruppe bestehend aus ionischen Flüssigkeiten und Metallsalzen, wobei ionische Flüssigkeiten besonders bevorzugt sind.

3.  Reaktives Klebeband nach Anspruch 2, **dadurch gekennzeichnet, dass** das Anion der ionischen Flüssigkeit ausgewählt ist aus der Gruppe bestehend aus Br-, $AlCl_4^-$, $Al_2Cl_7^-$, $NO_3^-$, $BF_4^-$, $PF_6^-$, $CH_3COO^-$, $CF_3COO^-$, $CF_3CO_3^-$, $CF_3SO_3^-$, $(CF_3SO_2)_2N^-$, $(CF_3SO_2)_3C^-$, $AsF_6^-$, $SbF_6^-$, $CF_3(CF2)_3SO_3^-$, $(CF_3CF_2SO_2)_2N^-$, $CF_3CF_2CF_2COO^-$, $(FSO_2)_2N^-$, $N(CN)_2^-$ und dabei besonders bevorzugt ausgewählt ist aus $(CF_3SO_2)_2N^-$, $(FSO_2)_2N^-$, $PF_6^-$, und $N(CN)_2^-$.

4.  Reaktives Klebeband nach einem der vorherigen Ansprüche, **dadurch gekennzeichnet, dass** das Kation der ionischen Flüssigkeit ausgewählt ist aus der Gruppe bestehend aus Kationen auf Imidazolium-Basis, Kationen auf Pyridinium-Basis, Kationen auf Pyrrolidin-Basis, Kationen auf Ammonium-Basis, Kationen auf Phosphonium-Basis, Kationen auf Oxazolium-Basis, Kationen auf Guadinium-Basis und Kationen auf Thiazolium-Basis, und dabei besonders bevorzugt ausgewählt ist aus der Gruppe bestehend aus Kationen auf Imidazolium-Basis, Kationen auf Pyridinium-Basis und Kationen auf Ammonium-Basis, wobei Kationen auf Imidazolium-Basis und Kationen auf Pyridinium-Basis wiederum bevorzugt sind.

5.  Reaktives Klebeband nach einem der vorhergehenden Ansprüche, **dadurch gekennzeichnet, dass** das Kation ausgewählt ist aus der Gruppe bestehend aus 1-Ethyl-3-methylimidazolium und 1-Butyl-3-methylimidazolium.

6.  Reaktives Klebeband nach einem der vorhergehenden Ansprüche, **dadurch gekennzeichnet, dass** der Elektrolyt der Klebemasseschicht D ausgewählt ist aus der Gruppe bestehend aus den ionischen Flüssigkeiten 1-Butyl-3-methylimidazolium-bis(trifluormethylsulfonyl)imid (BMIM-TFSI), 1-Butyl-3-methylimidazolium-bis(fluorsulfonyl)imid (BMIM-FSI), 1-Ethyl-3-methylimidazolium-bis(trifluormethylsulfonyl)imid (EMIM-TFSI), 1-Ethyl-3-methylimidazolium-bis(fluorsulfonyl)imid (EMIM-FSI) und 1-Ethyl-3-methylimidazolium-dicyanamid.

7.  Reaktives Klebeband nach einem der vorhergehenden Ansprüche, **dadurch gekennzeichnet, dass** das Polymer ausgewählt ist aus der Gruppe bestehend aus Ethylen-Vinylacetat-Copolymeren (EVA), Poly(meth)acrylaten, Polyurethanen (PU), Polyvinylacetaten (PVA), Polyvinylacetalen, wie insbesondere Polyvinylbutyral (PVB), Polyestern und Polymeren aus Monomeren umfassend N-Vinylverbindungen, wobei das Polymer besonders bevorzugt ausgewählt ist aus der Gruppe bestehend aus Ethylen-Vinylacetat-Copolymeren (EVA), Poly(meth)acrylaten, Poly(N-Vinylcaprolactam), Poly(N-Vinylpyrrolidon) und Polyurethanen (PU).

8.  Reaktives Klebeband nach einem der vorhergehenden Ansprüche, **dadurch gekennzeichnet, dass** das radikalisch polymerisierbare Monomer oder Oligomer einen Siedepunkt bei 1 mbar von mindestens 30 °C, bevorzugt mindestes 60 °C, und besonders bevorzugt von mindestens 80 °C, aufweist, oder bei 23 °C als Feststoff vorliegt.

9.  Reaktives Klebeband nach einem der Ansprüche 1 bis 8, **dadurch gekennzeichnet, dass** es ein Transferklebband ist und aus der Klebemasseschicht D besteht.

10. Reaktives Klebeband nach einem der Ansprüche 1 bis 8, **dadurch gekennzeichnet, dass** es zusätzlich wenigstens eine zweite Klebemasseschicht C umfasst, wobei die zweite Klebemasseschicht bevorzugt elektrisch leitfähig ist und bevorzugt ebenfalls eine reaktiv aushärtbare Klebemasseschicht ist.

11. Reaktives Klebeband nach einem der Ansprüche 1 bis 8, **dadurch gekennzeichnet, dass** es zusätzlich wenigstens die folgenden Schichten umfasst:

   • Eine zweite Klebemasseschicht C, welche bevorzugt ebenfalls eine reaktiv aushärtbare Klebemasseschicht ist; und
   • wenigstens eine elektrisch leitfähige Trägerschicht T, die zwischen den Schichten D und C angeordnet ist.

12. Reaktives Klebeband nach einem der Ansprüche 1 bis 11, **dadurch gekennzeichnet, dass** die wenigstens eine reaktiv aushärtbare Klebemasseschicht D eine lichthärtende Klebemasseschicht ist und c) wenigstens einen Initiator und d) wenigstens einen Redox-Katalysator enthält, wobei der Redox-Katalysator ein Photoredox-Katalysator ist.

13. Reaktives Klebeband nach Anspruch 12, **dadurch gekennzeichnet, dass** der Photoredox-Katalysator Ruthenium als Zentralatom und Bipyridin oder ein einfach oder mehrfach substituiertes Bipyridin-Derivat als Liganden, oder Iridium als Zentralatom und Phenylpyridin oder ein einfach oder mehrfach substituiertes Phenylpyridin-Derivat als Liganden, umfasst.

14. Reaktives Klebeband-System umfassend zumindest ein erstes reaktives Klebeband nach einem der Ansprüche 1 bis 11 und ein zweites reaktives Klebeband umfassend wenigstens eine reaktiv aushärtbare Klebemasseschicht, wobei die wenigstens eine reaktiv aushärtbare Klebemasseschicht D des ersten reaktiven Klebebandes wenigstens einen Initiator und bevorzugt keinen Redox-Katalysator und die wenigstens eine reaktiv aushärtbare Klebemasseschicht des zweiten reaktiven Klebebandes wenigstens einen Redox-Katalysator und bevorzugt keinen Initiator enthält, wobei das zweite reaktive Klebeband bevorzugt ebenfalls ein Klebeband nach einem der Ansprüche 1 bis 11 ist

15. Verklebter Verbund umfassend wenigstens folgende Schichten:

   • Ein erstes Substrat A; und
   • Ein zweites Substrat B; und
   • Ein Klebeband nach einem der Ansprüche 1 bis 13 oder ein Klebeband-System nach Anspruch 14, welches zwischen dem Substrat A und dem Substrat B angeordnet ist und die Substrate A und B miteinander verklebt.

16. Verfahren zum elektrischen Lösen des Verbundes nach Anspruch 15, umfassend wenigstens folgende Verfahrensschritte:

   i.) Anlegen einer Spannung an zwei verschiedenen Stellen des Verbundes, wobei die Spannung bevorzugt von 2 bis 50 V beträgt.

17. Verwendung des Klebebands gemäß einem der Ansprüche 1 bis 13 oder des Klebeband-Systems nach Anspruch 14 zur Verklebung von Bauteilen in elektronischen, optischen oder feinmechanischen Geräten, Automobilen, medizinischen Geräten und zahnmedizinischen Geräten.

Fig. 1

← 1

← 2

← 3

Fig. 2

← 1

← 2

← 3

2a

Fig. 3

2a

← 1

← 2

← 3

Fig. 4

2a

← 4

← 1

← 2

← 3

← 5

Fig. 5

−

+

2a

← 4

← 1

← 2

← 3

← 5

Fig. 6

← 4

2a

−
+

← 1

← 2

← 3

← 5

Fig. 7

← 4

← 3

← 2

2a

6a

← 1

← 6

← 7

← 5

Fig. 8

← 4

← 3

← 2

2a

← 1

6a

← 6

← 7

← 5

Fig. 9

← 1

← 3

Fig. 10

Fig. 11

# EP 4 588 988 A1

**Europäisches Patentamt**
**European Patent Office**
**Office européen des brevets**

## EUROPÄISCHER RECHERCHENBERICHT

**Nummer der Anmeldung**

EP 24 15 2271

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2023/159799 A1 (AKAMATSU KAORI [JP] ET AL) 25. Mai 2023 (2023-05-25) | 1-11, 15-17 | INV. C09J9/02 |
| Y | * Absätze [0001], [0006], [0008], [0147], [0179], [0181] - [0198]; Ansprüche 13, 14; Abbildungen; Beispiele 12, 17; Tabelle 2 * | 13,14 | C09J11/06 C09J7/35 |
| | - - - - - | | |
| X | WO 2023/047860 A1 (LINTEC CORP [JP]) 30. März 2023 (2023-03-30) * Absätze [0150] - [0154], [0170]; Anspruch 13; Abbildung 2; Beispiel 1 * | 1,2,7-9, 12,15,17 | |
| | - - - - - | | |
| Y | DE 10 2021 125429 A1 (TESA SE [DE]) 30. März 2023 (2023-03-30) * Absätze [0043] - [0047]; Beispiele * | 13 | |
| | - - - - - | | |
| Y | DE 10 2013 222278 A1 (TESA SE [DE]) 7. Mai 2015 (2015-05-07) * Absatz [0096] * | 14 | |
| | - - - - - | | |

**RECHERCHIERTE SACHGEBIETE (IPC)**

C09J
C08J

Der vorliegende Recherchenbericht wurde für alle Patentansprüche erstellt

| Recherchenort | Abschlußdatum der Recherche | Prüfer |
|---|---|---|
| München | 31. Mai 2024 | Kahl, Philipp |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**　　　　EP 24 15 2271

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-05-2024

| Im Recherchenbericht angeführtes Patentdokument | Datum der Veröffentlichung | Mitglied(er) der Patentfamilie | | Datum der Veröffentlichung |
|---|---|---|---|---|
| US 2023159799 A1 | 25-05-2023 | CN | 115210334 A | 18-10-2022 |
| | | JP | 2021138941 A | 16-09-2021 |
| | | KR | 20220143862 A | 25-10-2022 |
| | | TW | 202140728 A | 01-11-2021 |
| | | US | 2023159799 A1 | 25-05-2023 |
| | | WO | 2021177197 A1 | 10-09-2021 |
| WO 2023047860 A1 | 30-03-2023 | TW | 202317650 A | 01-05-2023 |
| | | WO | 2023047860 A1 | 30-03-2023 |
| DE 102021125429 A1 | 30-03-2023 | CN | 115895457 A | 04-04-2023 |
| | | DE | 102021125429 A1 | 30-03-2023 |
| | | EP | 4159775 A1 | 05-04-2023 |
| | | KR | 20230047315 A | 07-04-2023 |
| | | US | 2023117532 A1 | 20-04-2023 |
| DE 102013222278 A1 | 07-05-2015 | CA | 2926519 A1 | 07-03-2015 |
| | | CN | 105705601 A | 22-06-2016 |
| | | DE | 102013222278 A1 | 07-05-2015 |
| | | EP | 3063243 A1 | 07-09-2016 |
| | | JP | 6513651 B2 | 15-05-2019 |
| | | JP | 2016539218 A | 15-12-2016 |
| | | KR | 20160082526 A | 08-07-2016 |
| | | TW | 201529787 A | 01-08-2015 |
| | | US | 2016264823 A1 | 15-09-2016 |
| | | WO | 2015062809 A1 | 07-05-2015 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2014202402 A1
- WO 2015062809 A1
- WO 2018104053 A1
- DE 102021125429 A1
- EP 3031875 B1
- EP 3199344 B1
- DE 102005050632 A1
- EP 4067401 A1
- EP 4050040 A1
- US 2007269659 A1
- EP 3910715 A1

**In der Beschreibung aufgeführte Nicht-Patentliteratur**

- *CHEMICAL ABSTRACTS*, 88-12-0
- *CHEMICAL ABSTRACTS*, 3395-98-0
- *CHEMICAL ABSTRACTS*, 110489-05-9
- *CHEMICAL ABSTRACTS*, 51727-47-0
- *CHEMICAL ABSTRACTS*, 48145-04-6
- *CHEMICAL ABSTRACTS*, 10595-06-9
- *CHEMICAL ABSTRACTS*, 16926-87-7
- *CHEMICAL ABSTRACTS*, 27697-00-3
- *CHEMICAL ABSTRACTS*, 61167-58-6
- *CHEMICAL ABSTRACTS*, 66492-51-1
- *CHEMICAL ABSTRACTS*, 13818-44-5
- *CHEMICAL ABSTRACTS*, 117646-83-0
- *CHEMICAL ABSTRACTS*, 13188-82-4
- *CHEMICAL ABSTRACTS*, 50940-49-3
- *CHEMICAL ABSTRACTS*, 20882-04-6
- *CHEMICAL ABSTRACTS*, 4203-89-8
- *CHEMICAL ABSTRACTS*, 444649-70-1
- *CHEMICAL ABSTRACTS*, 63225-53-6
- *CHEMICAL ABSTRACTS*, 32360-05-7
- *CHEMICAL ABSTRACTS*, 72869-86-4
- *CHEMICAL ABSTRACTS*, 1565-94-2
- *CHEMICAL ABSTRACTS*, 3253-39-2
- *CHEMICAL ABSTRACTS*, 97-90-5
- *CHEMICAL ABSTRACTS*, 53879-54-2
- *CHEMICAL ABSTRACTS*, 15625- 89-5
- *CHEMICAL ABSTRACTS*, 94108-97-1
- *CHEMICAL ABSTRACTS*, 26762-93-6
- *CHEMICAL ABSTRACTS*, 80-15-9
- *CHEMICAL ABSTRACTS*, 26762-92-5
- *CHEMICAL ABSTRACTS*, 5809-08-5
- *CHEMICAL ABSTRACTS*, 14783-09-6
- *CHEMICAL ABSTRACTS*, 80-62-6
- *CHEMICAL ABSTRACTS*, 13472-08-7
- *CHEMICAL ABSTRACTS*, 2235-00-9
- *CHEMICAL ABSTRACTS*, 15520-11-3
- *CHEMICAL ABSTRACTS*, 16969-10-1
- *CHEMICAL ABSTRACTS*, 7631-86-9
- *CHEMICAL ABSTRACTS*, 174899-82-2
- *CHEMICAL ABSTRACTS*, 235789-75-0
- *CHEMICAL ABSTRACTS*, 370865-89-7